# EUROPEAN PATENT SPECIFICATION

(11) **EP 4 149 647 B1**
(45) Date of publication and mention of the grant of the patent: **11.12.2024**
(21) Application number: 21856578.6
(22) Date of filing: 10.08.2021
(51) Int. Cl.: A63H 33/04, A63H 33/06, A63H 33/26, H01F 7/02, G09B 1/38

(54) **THREE-DIMENSIONAL GEOMETRIC ART TOYS**
DREIDIMENSIONALES GEOMETRISCHES KUNSTSPIELZEUG
JOUETS À BASE D'ART GÉOMÉTRIQUE TRIDIMENSIONNEL

(30) Priority: 13.08.2020 US 202016992295
(43) Date of publication of application: 22.03.2023
(73) Proprietor: Hoenigschmid, Andreas, Pacific Palisades, CA 90272 (US)
(72) Inventor: Hoenigschmid, Andreas, Pacific Palisades, CA 90272 (US)
(74) Representative: Forresters IP LLP
(86) International application number: PCT/US2021/045398
(87) International publication number: WO 2022/035868

(56) References cited:
- WO-A1-2014/038735
- WO-A1-2014/038735
- US-A1- 2007 037 469
- US-A1- 2010 038 850
- US-A1- 2010 087 119
- US-A1- 2014 357 151
- US-A1- 2015 065 007
- US-A1- 2015 065 007
- US-A1- 2016 074 765
- US-A1- 2016 074 765
- US-A1- 2019 262 737
- US-A1- 2019 262 737

## Description

### BACKGROUND

In geometry, a tetrahedron is a polygonal solid figure having six edges and four triangular surfaces, three of which meet at each of four corners or vertices. The tetrahedron is unique in that all other polygonal solid figures can be broken down into a plurality of tetrahedrons. Thus, a number of different polygonal solid shapes and/or configurations can be produced by manipulating or assembling a plurality of tetrahedrons relative to one another. In different applications, such a plurality of tetrahedrons can be viewed as an educational device for the study of polygonal solids, or as a puzzle or toy that can be used for entertainment or amusement. Additionally, some people may view the various polygonal solid shapes or configurations that can be formed as a form of art that can be displayed for others to see. In any of these applications, it can be desired to stably maintain the plurality of tetrahedrons in any of various configurations. A multitude of Three-Dimensional Geometric Art Toys can be found in the prior art document US 2016/074765 A1.

Accordingly, there is a need for improved educational devices, puzzles, and toys.

### SUMMARY

The invention is defined by the appended claims.

### DESCRIPTION OF THE DRAWINGS

The foregoing aspects and many of the attendant advantages of the present disclosure will become more readily appreciated as the same become better understood by reference to the following detailed description, when taken in conjunction with the accompanying drawings, wherein:
FIGURE 1A is a perspective view of a representative geometric art toy having features of the present disclosure, shown in a first configuration;
FIGURE 1B is another perspective view of the geometric art toy illustrated in FIGURE 1A;
FIGURE 2A is a perspective view of a representative embodiment of a toy member that can be used as part of the geometric art toy illustrated in FIGURE 1A;
FIGURE 2B is a simplified schematic top view of the toy member illustrated in FIGURE 2A prior to the toy member being formed into a shape of a tetrahedron;
FIGURE 2C is another simplified schematic top view of the toy member illustrated in FIGURE 2A prior to the toy member being formed into the shape of the tetrahedron;
FIGURE 2D is still another simplified schematic top view of the toy member illustrated in FIGURE 2A prior to the toy member being formed into the shape of the tetrahedron;
FIGURE 3A is a simplified schematic top view of the toy member illustrated in FIGURE 2A, including one or more first magnets;
FIGURE 3B is a simplified schematic top view of the toy member illustrated in FIGURE 2A, including one or more second magnets;
FIGURE 4A is a simplified schematic top view of two toy members illustrated in FIGURE 2A that are movably connected to one another with a first flexible connector;
FIGURE 4B is a simplified schematic top view of two toy members illustrated in FIGURE 2A that are movably connected to one another with a second flexible connector;
FIGURE 4C is a simplified schematic top view of two toy members illustrated in FIGURE 2A that are movably connected to one another with a third flexible connector;
FIGURE 5 is a simplified schematic top view of the geometric art toy illustrated in FIGURE 1A, the geometric art toy including a plurality of toy members that are movably connected to one another one or more first flexible connectors, one or more second flexible connectors, and one or more third flexible connectors;
FIGURE 6 is a perspective view of the geometric art toy illustrated in FIGURE 1A, shown in a second configuration;
FIGURE 7 is a perspective view of the geometric art toy illustrated in FIGURE 1A, shown in a third configuration;
FIGURE 8 is a perspective view of the geometric art toy illustrated in FIGURE 1A, shown in a fourth configuration;
FIGURE 9 is a perspective view of the geometric art toy illustrated in FIGURE 1A, shown in a fifth configuration;
FIGURE 10 is a perspective view of the geometric art toy illustrated in FIGURE 1A, shown in a sixth configuration;
FIGURE 11 is a perspective view of the geometric art toy illustrated in FIGURE 1A, shown in a seventh configuration;
FIGURE 12 is a perspective view of a representative toy assembly including a plurality of geometric art toys illustrated in FIGURE 1A;
FIGURE 13A is a schematic perspective view of a toy member of a geometric art toy in accordance with another representative embodiment of the present disclosure;
FIGURE 13B is another schematic perspective view of the toy member of FIGURE 13A, in accordance with another aspect of the present disclosure;
FIGURE 14A is a schematic view of a segment of a geometric art toy comprising a plurality of the toy members of FIGURE 13A, according to one representative embodiment of the present disclosure;
FIGURE 14B is a schematic view of the segment of the geometric art toy of FIGURE 14A, showing one representative polarity configuration;
FIGURE 14C is a schematic view of the segment of the geometric art toy of FIGURE 14A, showing another representative polarity configuration;
FIGURE 14D is a schematic view of the segment of the geometric art toy of FIGURE 14A, showing yet another representative polarity configuration;
FIGURE 14E is a schematic view of the segment of the geometric art toy of FIGURE 14A, showing yet another representative polarity configuration;
FIGURE 15A is a perspective partial exploded section view of a toy member according to one representative embodiment of the present disclosure;
FIGURE 15B is a partial rear elevation section view of the toy member of FIGURE 15A;
FIGURE 15C is a top plan view of a first part of the toy member of FIGURE 15A;
FIGURE 15D is rear elevation section view of the first part of the toy member of FIGURE 15A;
FIGURE 15E is a bottom plan view of a second part of the toy member of FIGURE 15A;
FIGURE 15F is a rear elevation view of the second part of the toy member of FIGURE 15A;
FIGURE 16A is a perspective section view showing one representative interaction between two of the toy members of FIGURE 15A, according to one aspect the present disclosure;
FIGURE 16B is a perspective section view showing another representative interaction between the two toy members of FIGURE 16A, according to one aspect of the present disclosure;
FIGURE 17A is a schematic perspective view of a toy member of a geometric art toy in accordance with another representative embodiment of the present disclosure, according to one aspect;
FIGURE 17B is a schematic perspective view of the toy member of FIGURE 17A, according to another aspect;
FIGURE 17C is a schematic perspective view of the toy member of FIGURE 17A, according to still another aspect;
FIGURE 18A is a schematic view of a segment of a geometric art toy comprising a plurality of the toy members of FIGURE 17A, according to one representative embodiment of the present disclosure;
FIGURE 18B is a schematic view of the segment of the geometric art toy of FIGURE 18A, showing one representative polarity configuration;
FIGURE 19A is a top schematic plan view of a toy member according to another representative embodiment of the present disclosure;
FIGURE 19B is a rear schematic elevation view of the toy member of FIGURE 19A;
FIGURE 19C is a right-side schematic elevation view of the toy member of FIGURE 19A;
FIGURE 20A is a schematic perspective view of a toy member of a geometric art toy in accordance with still another representative embodiment of the present disclosure, according to one aspect;
FIGURE 20B is a schematic perspective view of the toy member of FIGURE 20A, according to another aspect;
FIGURE 20C is a schematic perspective view of a toy member of a geometric art toy in accordance with still another representative embodiment of the present disclosure, according to one aspect; and
FIGURE 20D is a schematic perspective view of the toy member of FIGURE 20C, according to another aspect.

### DETAILED DESCRIPTION

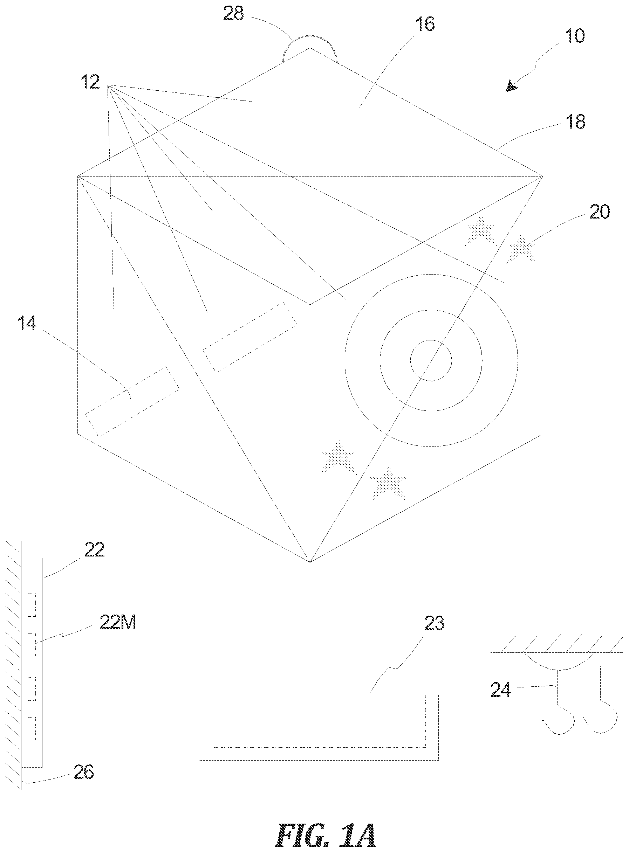

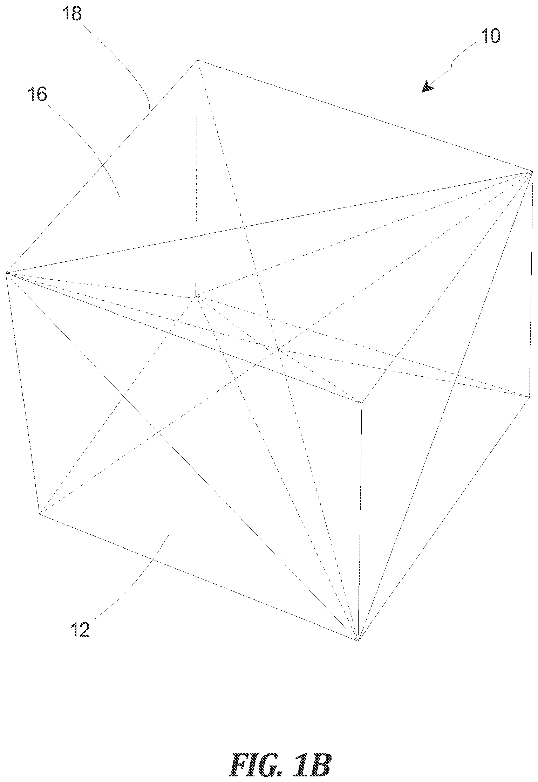

FIGURE 1A is a perspective view of a three-dimensional, geometric art toy 10 (also sometimes referred to herein simply as an "art toy") according to one representative and non-limiting embodiment of the present disclosure. Additionally, FIGURE 1B is another perspective view of the geometric art toy 10 illustrated in FIGURE 1A. In particular, FIGURE 1B more clearly illustrates (in phantom) certain features of the art toy 10.

The design of the art toy 10 can be varied as desired. In certain embodiments, as illustrated, the art toy 10 is comprised of a plurality of toy members 12 (some of which and/or portions of which are illustrated in phantom in FIGURE 1B) that are movably, e.g., hingedly, connected to one another. For example, in one such embodiment, the art toy 10 can comprise twelve toy members 12 that are each movably connected to two adjacent toy members 12. Additionally, in some embodiments, each of the toy members 12 can be formed in the shape of a tetrahedron (or a three-sided pyramid, with a base). Alternatively, the art toy 10 can include greater than or less than twelve toy members 12, one or more of the toy members 12 can be movably connected to more than two adjacent two members 12 or only one adjacent toy member 12, and/or one or more of the toy members 12 can be formed in another suitable shape.

As an overview, as described in greater detail herein below, the art toy 10 is designed to be selectively and stably positioned in a plurality of alternative configurations. Additionally, as illustrated herein, various such configurations can be substantially symmetrical about one or more axes that extend through a center of the configuration. More particularly, as shown, the art toy 10 includes the plurality of toy members 12 that are connected to one another and that are movable relative to one another such that the art toy 10 can be selectively and stably positioned in the plurality of alternative configurations. For example, FIGURES 1A and 1B illustrate the art toy 10 and/or the toy members 12 being positioned in a first configuration, *i.e.* a cube configuration. Further, in addition to each of the toy members 12 being movably, e.g., hingedly, connected to one or more adjacent toy members 12, each of the toy members 12 also includes one or more magnets 14 (two magnets 14 of which are illustrated in phantom in FIGURE 1A) that are positioned and oriented so as to effectively stabilize the art toy 10 and/or the toy members 12 relative to one another when the art toy 10 and/or the toy members 12 are positioned in any of the plurality of alternative configurations.

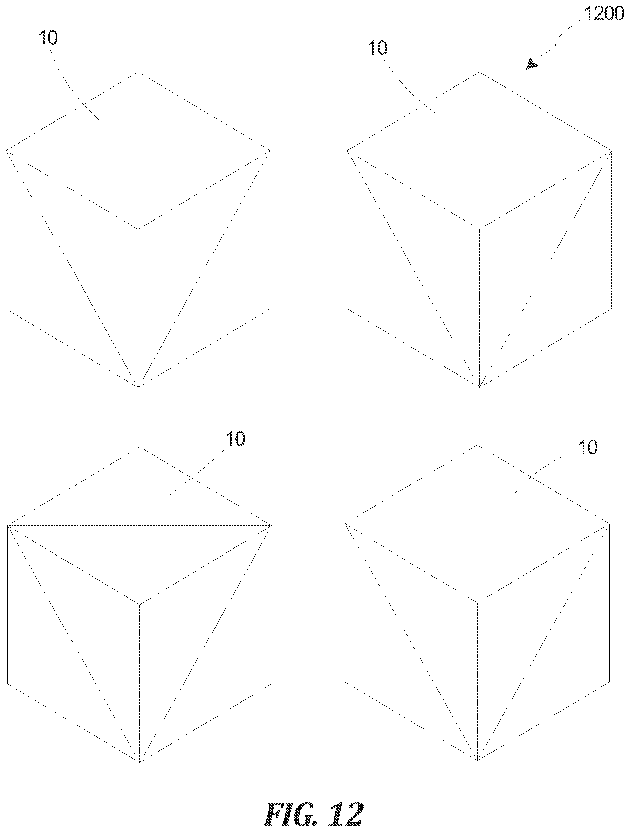

Still further, as provided herein, in certain embodiments, a plurality of art toys 10 can be utilized together as part of a toy assembly 1200 (illustrated in FIGURE 12), *i.e.* the plurality of art toys 10 can be selectively coupled together to form the toy assembly 1200 that can selectively and stably be positioned in various other configurations. More particularly, the precise positioning and orientation of the magnets 14, as disclosed in greater detail herein below, enables each of the art toys 10 in to be positioned in any of the various individual configurations disclosed herein, and to be subsequently selectively and stably coupled to one or more additional art toys 10 to provide the toy assembly 1200 that can be selectively and stably positioned in various additional, alternative configurations.

In one embodiment, as illustrated in FIGURE 1, each of the toy members 12 can be substantially identical in size and design, with the exception of the positioning and orientation of the one or more magnets 14. For example, in one embodiment, each of the toy members 12 can be formed as a tetrahedron, having four triangle-shaped surfaces 16 and six edges 18 that are sized to enable the art toy 10 to be positioned in the cube configuration with no interior voids or cavities within the cube. Moreover, in some embodiments, the art toy 10 can include one or more designs or indicia 20 that are included on one or more of the surfaces 16 of each toy member 12.

As further illustrated in FIGURE 1A, when the user desires to display the art toy 10, *e.g.,* as a work of art, the art toy 10 can further include a display support, *e.g.,* a display base 22, a display box 23 and/or a display hanger 24, that can be used to support the art toy 10, *i.e.* the toy members 12, relative to a surface 26, e.g., the ground, a wall, a ceiling, a table top, a counter top, or another surface.

It should be appreciated that the display support, e.g., the display base 22, the display box 23 and/or the display hanger 24, can have any suitable design that is able to support the art toy 10 relative to the surface 26. For example, in certain embodiments, the display base 22 can be a rectangular or square-shaped plate that can be placed on and/or affixed to the surface 26, *e.g.,* with nails or screws. Additionally, the display base 22 can include one or more support magnets 22M (illustrated in phantom) that interact with the magnets 14 of the art toy 10 to support the art toy 10 relative to the surface 26. In some embodiments, the display base 22 is sized to be no larger than the art toy 10 so that the display base 22 does not interfere with the display of the art toy 10.

The display box 23 can be a rectangular or square-shaped box that can be placed on and/or affixed to the surface 26, e.g., with nails or screws. Additionally, the display box 23 can have an opening that is sized and shaped to effectively receive and display the art toy 10 as desired.

Further, as shown, the display hanger 24 can be a hook that can be mounted on the surface 26. Additionally and/or alternatively, the display hanger 24 can include a thin string or rope having a tensile strength that is sufficient to support the weight of the art toy 10. Further, in one embodiment, the display hanger 24 can be adapted to engage a connector 28 that can be selectively or fixedly secured to one or more of the surfaces of the art toy 10. It should be appreciated that the connector 28 can have any suitable design that enables the art toy 10 to be stably supported relative to the surface 26. For example, the connector 28 can include one or more hanger members that can be used to selectively support the art toy 10 from the top, the bottom and/or the sides of the art toy 10 when the art toy 10 is displayed as desired.

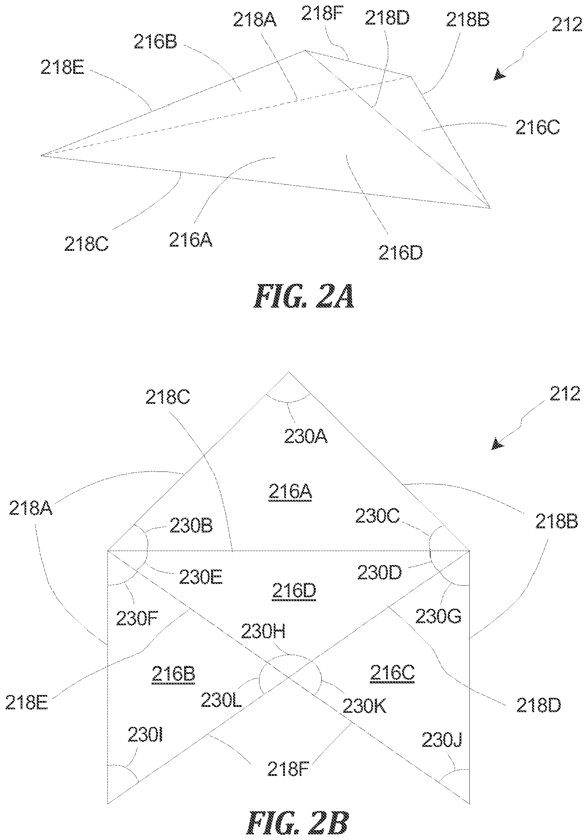

FIGURE 2A is a perspective view of an embodiment of a toy member 212 that can be used as part of the geometric art toy 10 illustrated in FIGURE 1A. For example, as noted above, the art toy 10 can be comprised of twelve toy members 212 that are substantially identical in size and design, with the possible exception of the positioning and orientation of the one or more magnets 14 (illustrated, for example, in FIGURE 1A).

As shown in FIGURE 2A, the toy member 212 can be formed as a tetrahedron having four triangle-shaped surfaces, *i.e.* a first surface 216A, a second surface 216B, a third surface 216C and a fourth surface 216D, and six edges, *i.e.* a first edge 218A, a second edge 218B, a third edge 218C, a fourth edge 2180, a fifth edge 218E and a sixth edge 218F. In one embodiment, using a length measurement of one unit as a base, the edges 218A-218F can be sized with the first edge 218A being one (1) unit, the second edge 218B being one (1) unit, the third edge 218C being the square root of two (" 12) units, the fourth edge 2180 being one-half the square root of three (√3/2) units, the fifth edge 218E being one-half the square root of three (√3/2) units, and the sixth edge 218F being one-half the square root of three (√3/2) units. With this design, as noted above, the twelve toy members 212, *i.e.* the twelve tetrahedrons, can be effectively formed into the cube configuration with no interior voids or cavities within the cube, such as shown in FIGURE 1B. More specifically, the first surface 216A of the toy member 212 can be bounded by the first edge 218A being one (1) unit, the second edge 218B being one (1) unit, and the third edge 218C being the square root of two ("12) units, with the first surface 216A forming one triangle-shaped half of one of the outer surfaces of the cube. Additionally, the other surfaces 216B, 216C, 2160 of the toy member 212 can be oriented to extend into the interior of the cube when the art toy 10 and/or the toy members 212 are positioned in the cube configuration. Alternatively, the edges 218A- 218F can be designed to be different lengths relative to one another.

It should be appreciated that the use of the terms "first surface", "second surface", "third surface" and "fourth surface" is merely for purposes of description and ease of illustration, and any of the surfaces 216A-216D can be referred to as the "first surface", the "second surface", the "third surface" and/or the "fourth surface". Similarly, it should also be appreciated that the use of the terms "first edge", "second edge", "third edge", "fourth edge", "fifth edge" and "sixth edge" is merely for purposes of description and ease of illustration, and any of the edges 218A-218F can be referred to as the "first edge", the "second edge", the "third edge" the "fourth edge", the "fifth edge" and/or the "sixth edge".

FIGURE 2B is a simplified schematic top view of the toy member 212 illustrated in FIGURE 2A prior to the toy member 212 having been formed into the shape of the tetrahedron. More specifically, FIGURE 2B illustrates a two-dimensional layout of the surfaces 216A-216D and the edges 218A-218F relative to one another that can be used as a template for forming the toy member 212, prior to the toy member 212 actually being positioned and/or formed into the shape of the tetrahedron.

It should be appreciated that as illustrated in FIGURE 2B, the two edges labeled as the first edge 218A will be positioned together as a single edge when the toy member 212 is formed into the shape of a tetrahedron. Similarly, it should be appreciated that as illustrated in FIGURE 2B, the two edges labeled as the second edge 218B will be positioned together as a single edge when the toy member 212 is formed into the shape of a tetrahedron. Moreover, it should also be appreciated that as illustrated in FIGURE 2B, the two edges labeled as the sixth edge 218F will be positioned together as a single edge when the toy member 212 is formed into the shape of a tetrahedron.

In addition to the lengths of each of the edges 218A-218F, as noted above, and the size of each of the triangle-shaped surfaces 216A-216D, FIGURE 2B also illustrates the angles that exist between each of the adjacent edges 218A-218F. More particularly, with the six edges 218A-218F having the sizes as specifically noted above, the angles between the edges 218A-218F are as follows: (i) a first angle 230A between the first edge 218A and the second edge 218B is approximately 90 degrees; (ii) a second angle 230B between the first edge 218A and the third edge 218C is approximately 45 degrees; (iii) a third angle 230C between the second edge 218B and the third edge 218C is approximately 45 degrees; (iv) a fourth angle 2300 between the third edge 218C and the fourth edge 2180 is approximately 35.26 degrees; (v) a fifth angle 230E between the third edge 218C and the fifth edge 218E is approximately 35.26 degrees; (vi) a sixth angle 230F between the first edge 218A and the fifth edge 218E is approximately 54.74 degrees; (vii) a seventh angle 230G between the second edge 218B and the fourth edge 2180 is approximately 54.74 degrees; (viii) an eighth angle 230H between the fourth edge 2180 and the fifth edge 218E is approximately 109.47 degrees; (ix) a ninth angle 2301 between the first edge 218A and the sixth edge 218F is approximately 54.74 degrees; (x) a tenth angle 230J between the second edge 218B and the sixth edge 218F is approximately 54.74 degrees; (xi) an eleventh angle 230K between the fourth edge 2180 and the sixth edge 218F is approximately 70.53 degrees; and (xii) a twelfth angle 230L between the fifth edge 218E and the sixth edge 218F is approximately 70.53 degrees.

It should be appreciated that the use of the terms "first angle" through "twelfth angle" is merely for purposes of description and ease of illustration, and any of the angles 230A-230L can be referred to as any of the "first angle" through the "twelfth angle".

Additionally, it should also be appreciated that in forming the toy member 212 into the shape of a tetrahedron from a two-dimensional layout such as illustrated in FIGURE 2B, the tetrahedron, *i.e.* the toy member 212, will be formed with a hollow interior. Alternatively, the toy member 212 can be formed into the shape of a tetrahedron in a different manner, and/or the toy member 212 can be formed without a hollow interior.

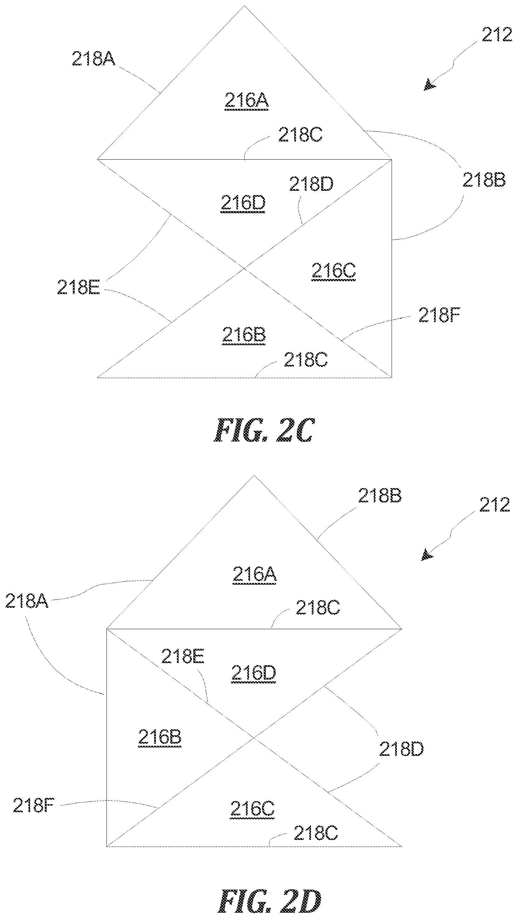

FIGURE 2C is another simplified schematic top view of the toy member 212 illustrated in FIGURE 2A prior to the toy member 212 having been formed into the shape of the tetrahedron. More specifically, FIGURE 2C illustrates an alternative two- dimensional layout of the surfaces 216A-2160 and the edges 218A-218F relative to one another that can be used as a template for forming the toy member 212, prior to the toy member 212 actually being positioned and/or formed into the shape of the tetrahedron.

It should be appreciated that as illustrated in FIGURE 2C, the two edges labeled as the second edge 218B will be positioned together as a single edge when the toy member 212 is formed into the shape of a tetrahedron. Similarly, it should be appreciated that as illustrated in FIGURE 2C, the two edges labeled as the third edge 218C will be positioned together as a single edge when the toy member 212 is formed into the shape of a tetrahedron. Moreover, it should also be appreciated that as illustrated in FIGURE 2C, the two edges labeled as the fifth edge 218E will be positioned together as a single edge when the toy member 212 is formed into the shape of a tetrahedron.

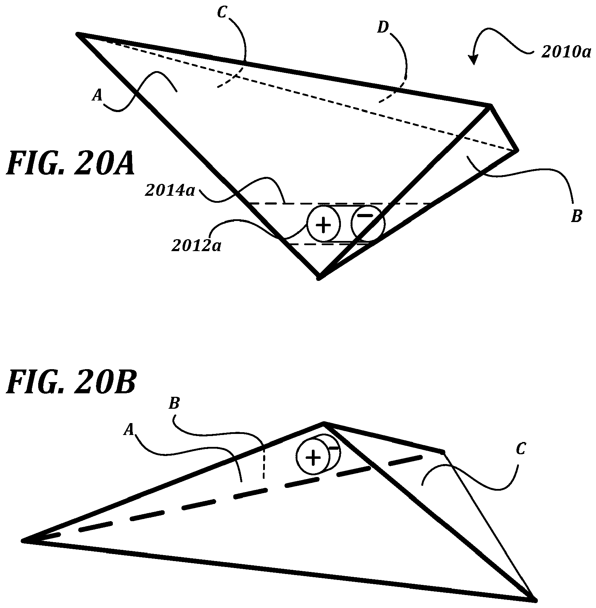

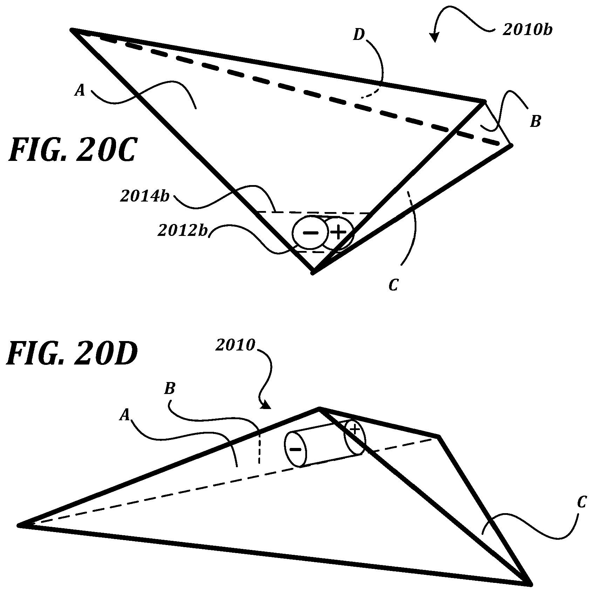

FIGURE 2D is still another simplified schematic top view of the toy member 212 illustrated in FIGURE 2A prior to the toy member 212 having been formed into the shape of the tetrahedron. More specifically, FIGURE 20 illustrates another alternative two- dimensional layout of the surfaces 216A-2160 and the edges 218A-218F relative to one another that can be used as a template for forming the toy member 212, prior to the toy member 212 actually being positioned and/or formed into the shape of the tetrahedron.

It should be appreciated that as illustrated in FIGURE 20, the two edges labeled as the first edge 218A will be positioned together as a single edge when the toy member 212 is formed into the shape of a tetrahedron. Similarly, it should be appreciated that as illustrated in FIGURE 20, the two edges labeled as the third edge 218C will be positioned together as a single edge when the toy member 212 is formed into the shape of a tetrahedron. Moreover, it should also be appreciated that as illustrated in FIGURE 20, the two edges labeled as the fourth edge 2180 will be positioned together as a single edge when the toy member 212 is formed into the shape of a tetrahedron.

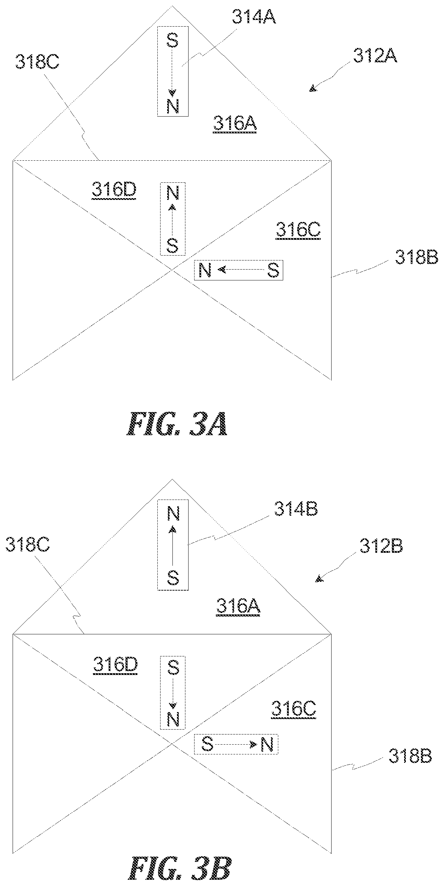

FIGURE 3A is a simplified schematic top view of a toy member, *i.e.* a first toy member 312A, similar to the toy member 212 as illustrated in FIGURE 2A, the first toy member 312A including one or more first magnets 314A. In one embodiment, as illustrated in FIGURE 3A, the first toy member 312A can include three first magnets 314A, with one first magnet 314A being coupled (e.g., positioned adj acent to, physically attached to *(e.g.,* adhered), held against, and the like) to each of the first surface 316A, the third surface 316C and the fourth surface 3160. Alternatively, the first toy member 312A can include greater than three or less than three first magnets 314A, and/or one or more of the first magnets 314A can be coupled to another surface of the first toy member 312A.

The size, shape, orientation and polarity of the first magnets 314A can be varied to suit the specific requirements of the first toy member 312A and/or the art toy 10 (illustrated in FIGURE 1A). For example, in one embodiment, the first magnets 314A can be bar magnets that are oriented as shown, *i.e.* with the north poles (shown with an "N") and the south poles (shown with an "S") oriented as illustrated. More particularly, in this embodiment, (i) the first magnet 314A coupled to the first surface 316A is oriented with the north pole facing toward the third edge 318C; (ii) the first magnet 314A coupled to the third surface 316C is oriented with the south pole facing toward the second edge 318B; and (iii) the first magnet 314A coupled to the fourth surface 3160 is oriented with the north pole facing toward the third edge 318C. Alternatively, the first magnets 314A can have a different design and/or the first magnets 314A can be oriented in a different manner than specifically shown in FIGURE 3A, *i.e.* to achieve a different polarity for the first magnets 314A. Additionally, in some embodiments, each of the first magnets 314A can be designed to have a magnetic strength of at least approximately one pound. Alternatively, the first magnets 314A can be designed to exhibit a different magnetic strength.

In one embodiment, each of the first magnets 314A can be coupled to a surface of the first toy member 312A within the interior (*i.e*. an inner surface) of the first toy member 312A when the first toy member 312A is formed into the shape of a tetrahedron. With this design, the first magnets 314A may not be visible to the user, and thus may not impact the appearance of the first toy member 312A and/or the art toy 10. Alternatively, one or more of the first magnets 314A can be coupled to an outer or exterior surface of the first toy member 312A when the first toy member 312A is formed into the shape of a tetrahedron.

FIGURE 3B is a simplified schematic top view of a toy member, *i.e.* a second toy member 312B, again similar to the toy member 212 as illustrated in FIGURE 2A, the second toy member 312B including one or more second magnets 314B. In one embodiment, as illustrated in FIGURE 3B, the second toy member 312B can include three second magnets 314B, with one second magnet 314B being coupled to each of the first surface 316A, the third surface 316C and the fourth surface 3160. Alternatively, the second toy member 312B can include greater than three or less than three second magnets 314B, and/or one or more of the second magnets 314B can be coupled to another surface of the second toy member 312B.

The size, shape, orientation and polarity of the second magnets 314B can be varied to suit the specific requirements of the second toy member 312B and/or the art toy 10 (illustrated in FIGURE 1A). For example, in one embodiment, the second magnets 314B can be bar magnets that are oriented as shown, *i.e.* with the north poles (shown with an "N") and the south poles (shown with an "S") oriented as illustrated. More particularly, in this embodiment, (i) the second magnet 314B coupled to the first surface 316A is oriented with the south pole facing toward the third edge 318C; (ii) the second magnet 314B coupled to the third surface 316C is oriented with the north pole facing toward the second edge 318B; and (iii) the second magnet 314B coupled to the fourth surface 3160 is oriented with the south pole facing toward the third edge 318C. Alternatively, the second magnets 314B can have a different design and/or the second magnets 314B can be oriented in a different manner than specifically shown in FIGURE 3B, *i.e.* to achieve a different polarity for the second magnets 314B. Additionally, in some embodiments, each of the second magnets 314B can be designed to have a magnetic strength of at least approximately one pound. Alternatively, the second magnets 314B can be designed to exhibit a different magnetic strength.

In one embodiment, each of the second magnets 314B can be coupled to a surface of the second toy member 312B within the interior *(i.e.* an inner surface) of the second toy member 312B when the second toy member 312B is formed into the shape of a tetrahedron. With this design, the second magnets 314B may not be visible to the user, and thus may not impact the appearance of the second toy member 312B and/or the art toy 10. Alternatively, one or more of the second magnets 314B can be coupled to an outer or exterior surface of the second toy member 312B when the second toy member 312B is formed into the shape of a tetrahedron.

It should be appreciated that in comparing the first toy member 312A illustrated in FIGURE 3A and the second toy member 312B illustrated in FIGURE 3B, the orientation and, thus, the polarity of the first magnets 314A of the first toy member 312A is substantially directly opposite to that of the orientation and polarity of the second magnets 314B of the second toy member 312B. With this design, in conjunction with the specific movable coupling of a plurality of first toy members 312A and a plurality of second toy members 312B to form the art toy 10, as described in greater detail herein below, the art toy 10 can be stably positioned and maintained in each of the alternative configurations as illustrated herein.

Moreover, as further provided herein, the precise positioning and orientation of the first magnets 314A of the first toy member 312A and the second magnets 314B of the second toy member 312B enable the assembled art toy 10 (illustrated in FIGURE 1) to be subsequently selectively and stably coupled to one or more additional art toys 10 to provide the toy assembly 1200 (illustrated in FIGURE 12) that can be selectively and stably positioned in various additional, alternative configurations.

Additionally, it should be appreciated that the use of the terms "first toy member" and "second toy member" is merely for purposes of description and ease of illustration, and any of the toy members 312A, 312B can be referred to as the "first toy member" and/or the "second toy member". Similarly, it should also be appreciated that the use of the terms "first magnets" and "second magnets" is merely for purposes of description and ease of illustration, and any of the magnets 314A, 314B can be referred to as the "first magnets" and/or the "second magnets".

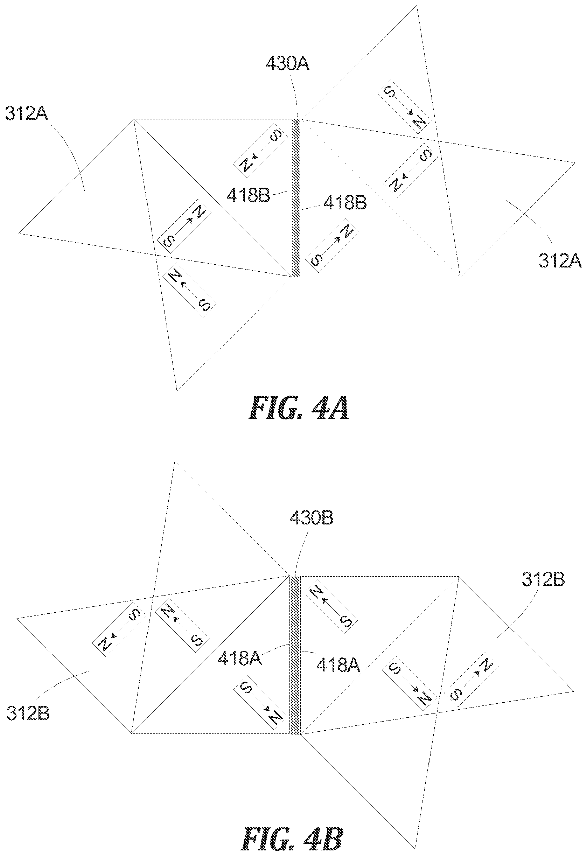

FIGURE 4A is a simplified schematic top view of two toy members, *i.e.* two first toy members 312A illustrated in FIGURE 3A, that are movably connected to one another with a first flexible connector 430A, e.g., a first hinge. More particularly, FIGURE 4A illustrates that the first flexible connector 430A is utilized to movably couple together the second edge 418B of one first toy member 312A with the second edge 418B of another first toy member 312A. Stated in another manner, when two first toy members 312A are positioned substantially adjacent to one another, and are thus connected to one another, the first flexible connector 430A is positioned to movably connect together the second edges 418B of the adjacent first toy members 312A.

The first flexible connector 430A can have any suitable design that enables the adjacent first toy members 312A to pivot relative to one another along the second edges 418B of each of the first toy members 312A. For example, in certain non-exclusive alternative embodiments, the first flexible connector 430A can be formed from a flexible adhesive, such as different types of tape and/or vinyl stickers. Alternatively, the first flexible connector 430A can be formed in another suitable manner.

FIGURE 4B is a simplified schematic top view of two toy members, *i.e.* two second toy members 312B illustrated in FIGURE 3B, that are movably connected to one another with a second flexible connector 430B, e.g., a second hinge. More particularly, FIGURE 4B illustrates that the second flexible connector 430B is utilized to movably couple together the first edge 418A of one second toy member 312B with the first edge 418A of another second toy member 312B. Stated in another manner, when two second toy members 312B are positioned substantially adjacent to one another, and are thus connected to one another, the second flexible connector 430B is positioned to movably connect together the first edges 418A of the adjacent second toy members 312B.

The second flexible connector 430B can have any suitable design that enables the adjacent second toy members 312B to pivot relative to one another along the first edges 418A of each of the second toy members 312B. For example, in certain non-exclusive alternative embodiments, the second flexible connector 430B can be formed from a flexible adhesive, such as different types of tape and/or vinyl stickers. Alternatively, the second flexible connector 430B can be formed in another suitable manner.

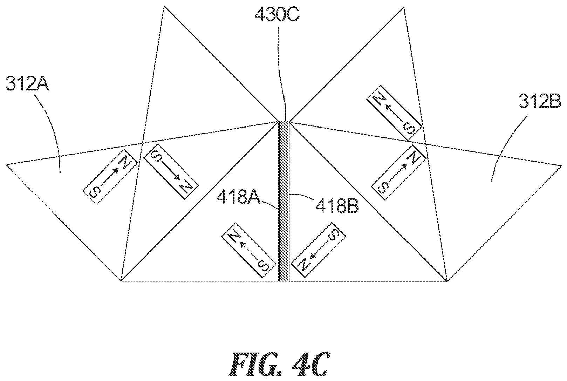

FIGURE 4C is a simplified schematic top view of two toy members, *i.e.* a first toy member 312A of FIGURE 3A and a second toy member 312B illustrated in FIGURE 3B, that are movably connected to one another with a third flexible connector 430C, e.g., a third hinge. More particularly, FIGURE 4C illustrates that the third flexible connector 430C is utilized to movably connect together the first edge 418A of the first toy member 312A with the second edge 418B of the second toy member 312B. Stated in another manner, when a first toy member 312A and a second toy member 312B are positioned substantially adjacent to one another, and are thus connected to one another, the third flexible connector 430C is positioned to movably connect together the first edge 418A of the first toy member 312A and the second edge 418B of the adjacent second toy member 312B.

The third flexible connector 430C can have any suitable design that enables the adjacent first toy member 312A and second toy member 312B to pivot relative to one another along the first edge 418A and the second edge 418B, respectively, of each of the toy members 312A, 312B. For example, in certain non-exclusive alternative embodiments, the third flexible connector 430B can be formed from a flexible adhesive, such as different types of tape and/or vinyl stickers (or stickers formed from other suitable materials). Alternatively, the third flexible connector 430C can be formed in another suitable manner.

When FIGURES 4A-4C are viewed in conjunction with one another, it should be understood that (i) each first toy member 312A can be flexibly connected along the first edge 418A to the second edge 418B of an adjacent second toy member 312B (*i*.*e*. with adjacent first toy member 312A *(i.e.* with a third flexible connector 430C).

It should be appreciated that the use of the terms "first flexible connector", "second flexible connector" and "third flexible connector" is merely for purposes of description and ease of illustration, and any of the flexible connectors 430A, 430B, 430C can be referred to as the "first flexible connector" the "second flexible connector" and/or the "third flexible connector".

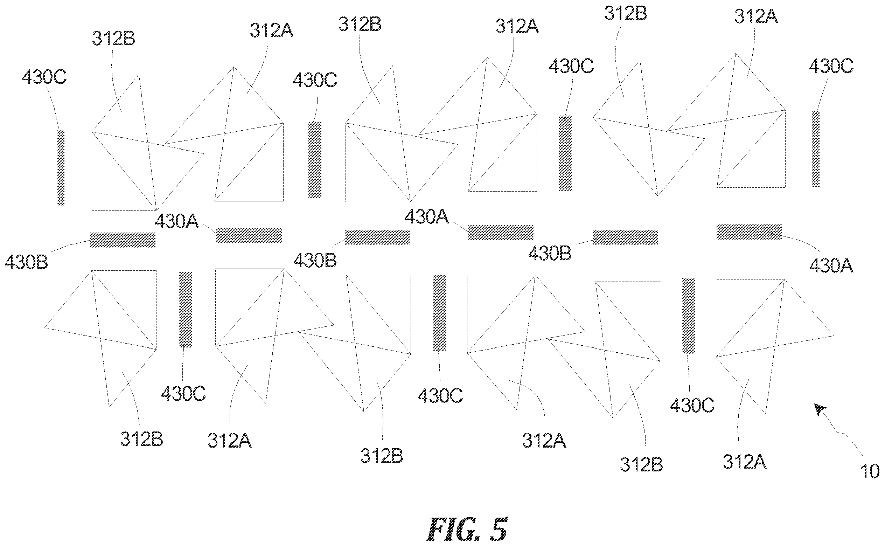

FIGURE 5 is a simplified schematic top view of the geometric art toy 10 illustrated in FIGURE 1. As shown, the geometric art toy 10 includes a plurality of toy members, *i.e.* a plurality of first toy members 312A illustrated in FIGURE 3A and a plurality of second toy members 312B illustrated in FIGURE 3B, that are movably connected to one another utilizing one or more first flexible connectors 430A, one or more second flexible connectors 430B, and one or more third flexible connectors 430C. More particularly, FIGURE 5 illustrates an embodiment of a general schematic layout of the toy members 312A, 312B relative to one another in the formation of the art toy 10. As noted above, and as shown in FIGURE 5, each of the one or more first flexible connectors 430A is utilized to movably connect two first toy members 312A together, each of the one or more second flexible connectors 430B is utilized to movably connect two second toy members 312B together, and each of the one or more third flexible connectors 430C is utilized to movably connect one first toy member 312A and one second toy member 312B together. It should be appreciated that since FIGURE 5 is illustrating a three-dimensional connection scheme in a two-dimensional illustration, the third flexible connectors 430C illustrated at either end of the FIGURE are, in reality, a single third flexible connector 430C. Additionally, it should be understood that the individual toy members 312A, 312B are illustrated as being spaced apart from one another and spaced apart from the flexible connectors 430A, 430B, 430C for purposes of clarity, *i.e.* such that the various connections between adjacent toy members 312A, 312B can be more clearly demonstrated. Further, the first magnets 314A of the first toy members 312A and the second magnets 314B of the second toy members 312B have been omitted from FIGURE 5 for purposes of clarity.

In the embodiment illustrated in FIGURE 5, the art toy 10 includes six first toy members 312A and six second toy members 312B. Additionally, as shown, each of the first toy members 312A is movably connected to one other first toy member 312A *(i.e.* with a first flexible connector 430A) and one second toy member 312B *(i.e.* with a third flexible connector 430C); and each of the second toy members 312B is movably connected to one other second toy member 312B (*i.e*. with a second flexible connector 430B) and one first toy member 312A *(i.e.* with a third flexible connector 430C). Alternatively, the art toy 10 can include greater than six or less than six first toy members 312A, greater than six or less than six second toy members 312B, and/or the toy members 312A, 312B can be movably connected to one another in a different manner. Additionally, in this embodiment, the art toy 10 includes twelve total flexible connectors 430A, 430B, 430C. More particularly, as shown, the art toy 10 includes three first flexible connectors 430A, three second flexible connectors 430B and six third flexible connectors 430C. Alternatively, the art toy 10 can include greater than or less than twelve flexible connectors 430A, 430B, 430C, and/or the art toy 10 can include different numbers of individual flexible connectors 430A, 430B, 430C than specifically illustrated in FIGURE 5.

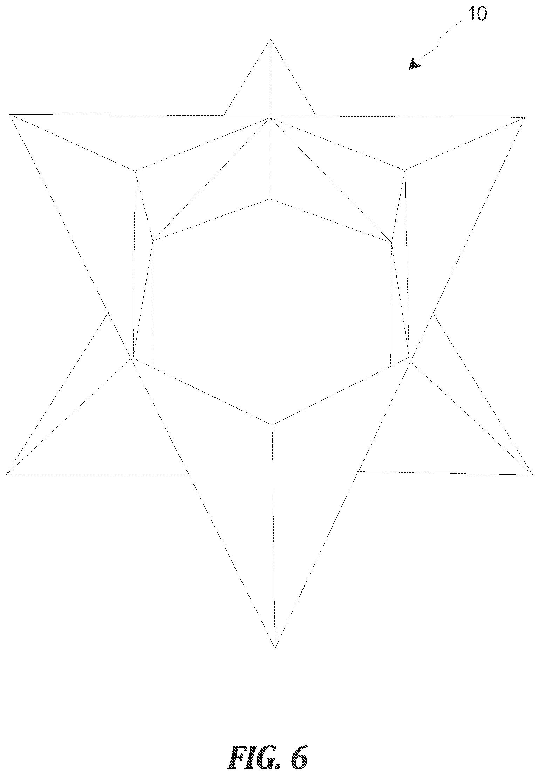

FIGURES 6-11 illustrate various other potential configurations for the art toy 10. With the specific positioning and orientation of the magnets 314A, 314B and the flexible connectors 430A, 430B, 430C as described in detail herein above, the art toy 10 can be stably maintained in any of the other potential configurations as disclosed and/or illustrated.

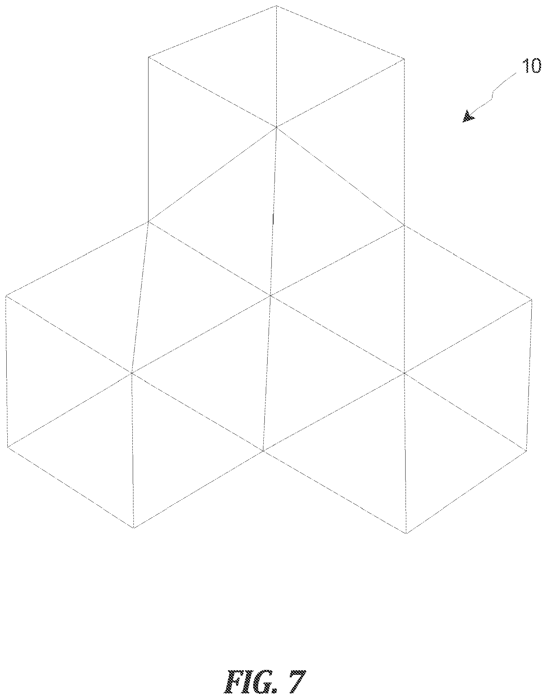

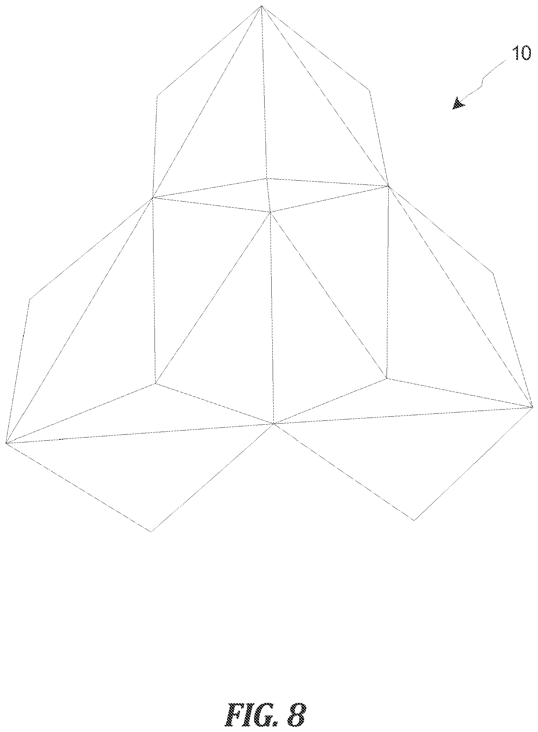

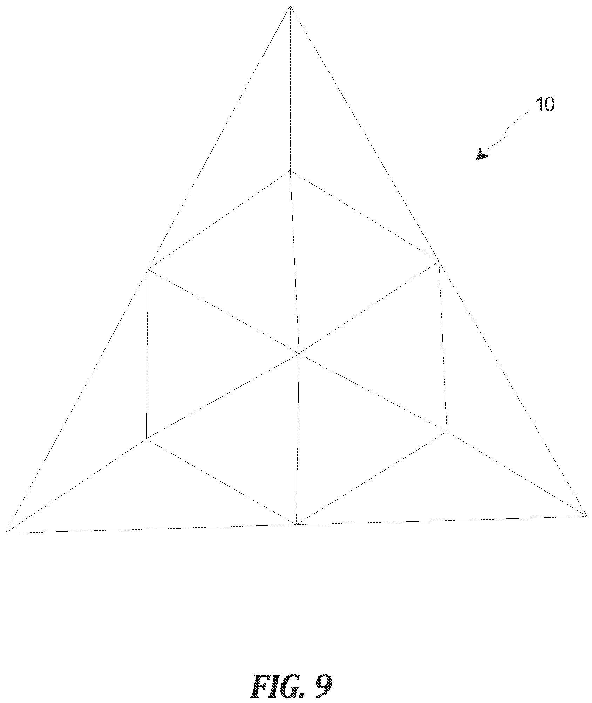

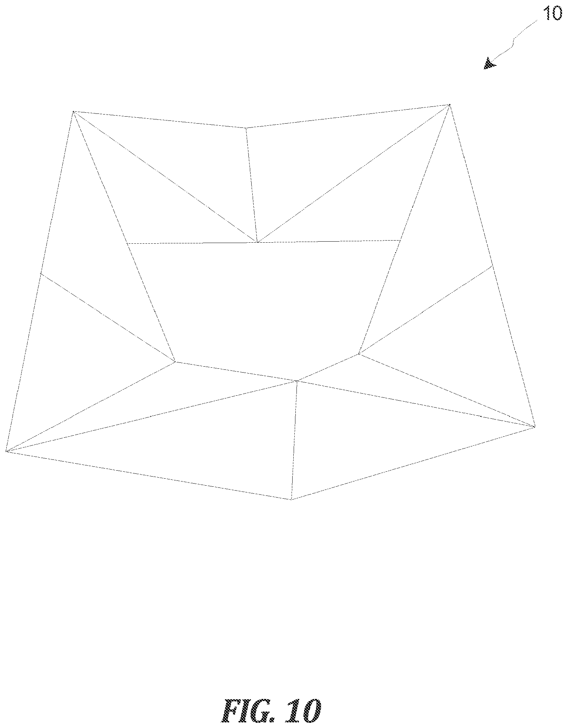

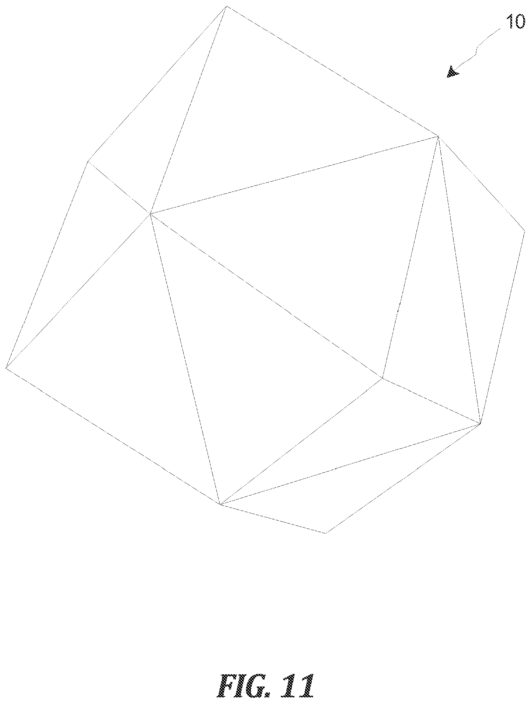

More particularly, FIGURE 6 is a perspective view of the geometric art toy 10 illustrated in FIGURE 1, the geometric art toy 10 being in a second configuration; FIGURE 7 is a perspective view of the geometric art toy 10 illustrated in FIGURE 1, the geometric art toy 10 being in a third configuration; FIGURE 8 is a perspective view of the geometric art toy 10 illustrated in FIGURE 1, the geometric art toy 10 being in a fourth configuration; FIGURE 9 is a perspective view of the geometric art toy 10 illustrated in FIGURE 1, the geometric art toy 10 being in a fifth configuration; FIGURE 10 is a perspective view of the geometric art toy 10 illustrated in FIGURE 1, the geometric art toy 10 being in a sixth configuration; and FIGURE 11 is a perspective view of the geometric art toy 10 illustrated in FIGURE 1, the geometric art toy 10 being in a seventh configuration.

During use of the art toy 10, the individual toy members 12 can be quickly and easily moved and manipulated relative to one another to enable the user to form the art toy 10 into any of the disclosed configurations. Moreover, as noted, the positioning, orientation and polarity of the magnets 14 within each of the toy members 12 enables the art toy 10 to be stably maintained in any such configurations. As such, the art toy 10 and the toy members 12 can be viewed as an educational device for the study of polygonal solids, as a puzzle or toy that can be used for entertainment or amusement, and/or as a work of art that can be displayed for others to see.

FIGURE 12 is a perspective view of a toy assembly 1200 including a plurality of geometric art toys 10 illustrated in FIGURE 1. For example, in some embodiments, as shown in FIGURE 12, the toy assembly 1200 can include four geometric art toys 10. Alternatively, the toy assembly 1200 can be designed to include greater than four or less than four art toys 10.

Additionally, in one embodiment, each of the geometric art toys 10 within the toy assembly 1200 is substantially identical in design. Further, each of the geometric art toys 10 can be selectively and stably positioned in the various alternative configurations as illustrated and described above.

Moreover, based on the precise positioning, orientation and polarity of the magnets 314A, 314B (illustrated in FIGURES 3A and 3B, respectively), the geometric art toys 10 can be selectively and stably, *i.e.* magnetically, coupled together to form additional, alternative configurations with the toy assembly 1200. Additionally, various such additional, alternative configurations can by substantially symmetrical about one or more axes that extend through a center of the configuration. In various embodiments, each of the geometric art toys 10 can be positioned in the same individual configuration before the geometric art toys 10 are coupled together to form some of the additional, alternative configurations. Alternatively, one or more of the geometric art toys 10 can be positioned in different individual configurations before the geometric art toys 10 are coupled together to form others of the additional, alternative configurations.

During the development of the art toy 10 and/or the toy assembly 1200, it has been found that utilizing a number of art toys 10 of a multiple of four, results in a toy assembly 1200 that fall into a neat family of complexity. It should further be appreciated that with the addition of more and more art toys 10 to the toy assembly 1200, and with the precise positioning and orientation of the magnets 314A, 314B within each of the art toys 10, the toy assembly 1200 can thus be manipulated into almost an infinite number of stable configurations.

In some representative embodiments, geometric art toys of the present disclosure include one or more magnets that are configured to move (e.g., shift, slide, rotate, and/or the like) in such a way that each moving magnet exhibits a given polarity through two or more faces of a toy member, in two or more directions, etc. Restated, a tetrahedral toy member of the geometric art toy is configured such that one or more magnets associated with that toy member moves, thereby exhibiting a polarity (e.g., a north or south polarity, a positive or negative polarity, etc.) through two or more faces of that tetrahedral toy member. For example, the moving magnet is configured to move in response to the presence of a nearby magnetic field, such as a magnetic field created by a magnet (e.g., a moving magnet) in an adjacent toy member.

In such embodiments, each moving magnet advantageously simulates a plurality of fixed magnets (non-moving magnets). For example, in some representative geometric art toys having only twelve tetrahedral toy members, each toy member includes only a single moving magnet, i.e., twelve total moving magnets in the geometric art toy. Due to the movement of each moving magnet, such embodiments advantageously simulate the functionality of geometric art toys having 24, 36, or another number of fixed magnets.

Before describing representative and non-limiting embodiments of geometric art toys having one or more moving magnets, it shall be understood that the present disclosure includes numerous implementations of this concept, including embodiments having any combination of features described with respect to previously described embodiments. In some embodiments, the geometric art toy includes one or more toy members having one or more moving magnets. For example, in some embodiments, all toy members of the geometric art toy include at least one moving magnet (*e.g*., one, two, or three moving magnets). In some embodiments, one or more toy members include at least one moving magnet *(e.g.,* one, two, or three moving magnets), while other toy members do not include any moving magnets *(e.g.,* at least one toy member, but less than all toy members, includes a moving magnet). In some embodiments, the moving magnets are the only magnets of each toy member. In some embodiments, one or more toy members includes at least one moving magnet and one or more fixed magnets, to provide additional functionality and entertainment. The present disclosure includes additional embodiments having any combination of the foregoing representative embodiments.

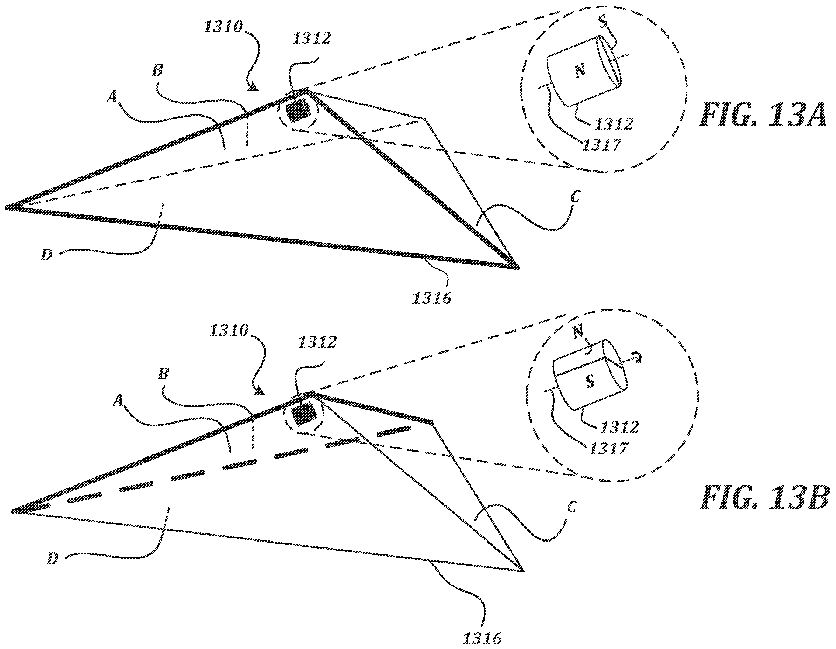

FIGURE 13A - 13B schematically illustrate a representative embodiment of a tetrahedral toy member 1310 having a single moving magnet 1312 that is diametrically magnetized. The tetrahedral toy member 1310 has four faces A, B, C, and D, with faces B and D hidden from view. In some embodiments, the A and D faces *(i.e.,* a first face and a fourth face) form a right angle relative to each other, with one of the A or D faces being relatively larger than the other, and the B and C faces being substantially the same size as each other. In the illustrated embodiment, the magnet 1312 is positioned inside a tetrahedral outer shell 1316 in such a manner that it can rotate about its longitudinal axis 1317.

Generally, the magnet 1312 is not permitted to move in an uncontrolled manner inside the tetrahedral toy member 1310. Rather, the tetrahedral toy member 1310 is provided with one or more internal structures *(e.g.,* a cradle) that retain the moving magnet 1312 adjacent to two or three faces while allowing the moving magnet 1312 to move within a controlled region. For example, in some embodiments, the toy member 1310 is provided with an internal cradle, track, slot, compartment, cavity, support, and/or the like. Representative structures for enabling the magnet 1312 to move within a controlled region are described below.

As shown in FIGURES 13A and 13B, the moving magnet 1312 is positioned adjacent to faces A and B such that it can move relative to the outer shell 1316 about axis 1317. In FIGURE 13A, the north portion of the magnet 1312 is adjacent to face A (outlined in bold). By comparison, in FIGURE 13B, the magnet 1312 has rotated about the axis 1317 such that the north portion is adjacent to face B (outlined in bold). As a result of this movement of the magnet, both the north and south sides of the magnet 1312 can be positioned adjacent to either face A or B. Accordingly, the magnet 1312 can alternatingly exhibit a first polarity *(e.g.,* a positive or negative polarity) through either face A or B. By "alternatingly," the present disclosure intends that the magnet exhibits the first polarity through one face at a time. Advantageously, this enables a single moving magnet 1312 to simulate a plurality of fixed magnets.

The embodiment of FIGURES 13A and 13B is representative, not limiting. In some embodiments, the magnet 1312 is a cylinder magnet, a disc magnet, a spherical magnet, or another magnet type. In some embodiments, the magnet 1312 translates, shifts, slides, or tumbles relative to outer shell 1316 in order to alternatingly exhibit the first polarity through face A or face B. In some embodiments, the magnet 1312 rotates in more than one direction, *e.g.,* in the case of a spherical magnet 1312, about a center. This advantageously enables the magnet to alternatingly exhibit a polarity through more than two faces, *e.g.,* three faces. In some embodiments, the magnet 1312 is positioned adjacent to different faces, *e.g.,* to adjacent to faces A and C, A and D, B and C, B and D, or D and C. In some embodiments, the magnet 1312 is positioned adjacent to more than two faces, *e.g.,* adjacent to faces A, B, and C. In some embodiments, the magnet 1312 is positioned adjacent to a vertex where three faces meet *(e.g.,* where faces A, B, and C meet).

In some embodiments, geometric art toys of the present disclosure include one or more moving-magnet toy members 1310 such as shown in FIGURES 13A and 13B, to provide enhanced entertainment, to reduce manufacturing cost, and/or for other benefit. In some embodiments, geometric art toys include two or more different types of moving-magnet toy member *(e.g.,* a first type and a second type), each type having a different moving magnet configuration configured to alternatingly exhibit a magnet polarity through different faces. As described below, in some embodiments, the different moving-magnet toy member types are arranged to enable the selective magnetic coupling of toy members in one or more configurations *(e.g.,* any one or more of the configurations shown in FIGURES 6-12).

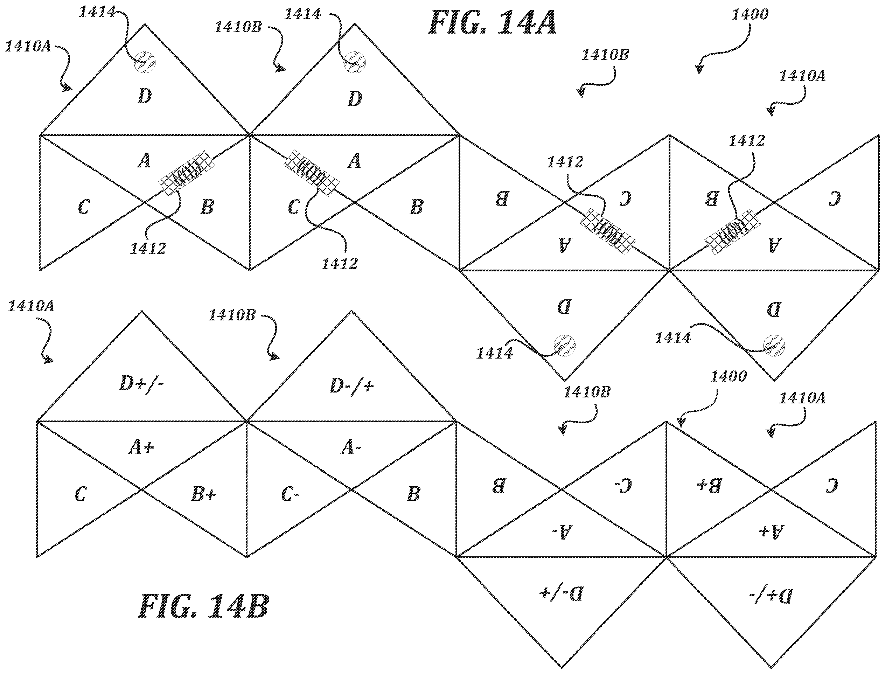

FIGURES 14A schematically shows one representative segment of a geometric art toy 1400 having an ordered arrangement of flexibly-connected "A-type" and "B-type" moving-magnet tetrahedral toy members 1410A and 1410B, respectively, each of which includes one moving magnet 1412 and an optional fixed magnet 1406. As with the toy member 1310 of FIGURES 13A - 13B, each toy member 1410 includes four faces: A, B, C, and D. Aside from the placement of the moving magnets 1412, the A-type and B-type toy members 1410 are structurally the same, *i.e.,* have the same tetrahedral size and shape. Likewise, the moving magnets 1412 are the same between the A-type and B-type toy members 1410. Although A-type toy members 1410A are structurally similar to B-type toy members 1410B in the illustrated embodiment, differences in polarities between the magnets of A-type and B-type toy members 1410 arise when two or more toy members 1402 are placed near each other. In some embodiments, not every A-type toy member 1410A has a same magnetic polarity configuration as every other A-type toy member 1410A, and/or not every B-type toy member 1410B has a same magnetic polarity configuration as every other B-type toy member 1410B. In some embodiments, A-type toy members 1410A have additional differences relative to B-type toy members 1410B.

In the illustrated embodiment, each A-type toy member 1410A includes one moving magnet 1412 positioned adjacent to the A and B faces thereof, the moving magnet 1412 being configured to alternatingly exhibit a first polarity *(e.g.,* a positive polarity) through the A and B faces as a result of its controlled movement within the toy member 1410A. Representative structure for positioning the moving magnet 1412 is described below. Each B-type toy member 1410B includes one moving magnet 1412 positioned adjacent to the A and C faces thereof, the moving magnet 1412 being configured to alternatingly exhibit a second polarity through the A and C faces as a result of its controlled movement with the toy member 1410B, the second polarity being different from the first polarity *(i.e.,* a negative polarity in the example provided above). The optional fixed magnet 1414 is positioned adjacent to the D face in each of the A- and B-type toy members 1410. In some embodiments, the polarity of the optional fixed magnet 1414 differs between the A-type and B-type toy members 1410. In some embodiments, the polarity of the optional fixed magnet 1414 is the same between the A-type and B-type toy members 1410.

As shown in FIGURE 14A, the "A-type" and "B-type" toy members 1410 are ordered in an ABBA sequence. That is, an A-type toy member 1410A is flexibly connected to B-type toy member 1410B (such as with a flexible connector as described above), which is flexibly connected to another B-type toy member 1410B, which is connected to an A-type toy member 1410A. In the non-limiting embodiment shown, the B side of each A-type toy member 1410A is flexibly connected to the C side of the adjacent B-type toy member 1410B. Adjacent B-type toy members 1410B have a different orientation such that adjacent B sides are flexibly connected. In some embodiments, A-type toy members 1410A and B-type toy member 1410B are flexibly connected in any connection scheme described herein.

In some embodiments, the ABBA sequence of FIGURE 14A is repeated two or more times. For example, in one representative embodiment, the geometric art toy 1400 of FIGURE 14A includes twelve toy members 1410, each having a single moving magnet 1412 as shown, but without the optional fixed magnet 1414. Thus, there are twelve moving magnets 1412 in such embodiments. The twelve toy members 1410 are connected in a loop, each toy member 1410 being movably connected to two adjacent toy members 1410 (as described above), with the ABBA sequence appearing four times total such that the geometric art toy 1400 includes twelve toy members 1410 connected in the following sequence: ABBAABBAABBA.

FIGURE 14B illustrates one representative polarity configuration of the geometric art toy 1400 of FIGURE 14A. This polarity configuration is representative, not limiting. The polarity configuration shown in FIGURE 14B is enabled by the moving magnets 1412 shown in FIGURE 14A. That is, when toy members 1410 are positioned adjacent to each other *(e.g.,* flexibly connected as shown), one or more of the moving magnets 1412 (in the A-type toy members 1410A and/or B-type toy members 1410B) move such that the polarity configuration shown is achieved. For example, referring briefly again to FIGURE 14A, the mere proximity of the moving magnets 1412 of flexibly connected toy members 1410A and 1410B cause one or both of those moving magnets 1412 to move such that they are attracted to each other, *i.e.,* exhibit opposite polarities through the adjacent faces.

The polarity configuration of FIGURE 14B will now be described in more detail, with reference to FIGURE 14A. The moving magnet 1412 of each A-type toy member 1410A is configured to alternatingly exhibit a positive polarity through each of the A and B faces. The C face remains un-magnetized. The D face is magnetized in either a positive or negative polarity by the optional fixed magnet 1414. The moving magnet 1412 of each B-type toy member 1410B is configured to alternatingly exhibit a negative polarity through each of the A and C faces. The B face remains un-magnetized. The D face is magnetized in either a positive or negative polarity by the optional fixed magnet 1414.

Given the polarities described above and shown in FIGURE 14B, when the A-type and B-type toy members are flexibly connected in the ordered combination shown in FIGURE 14A, the positively-magnetized B face of each A-type toy member 1410A magnetically couples with the negatively-magnetized C face of the adj acent B-type toy member 1410B *(e.g.,* when the geometric art toy 1400 is manipulated into the configuration of FIGURE 6). Also, the unmagnetized B faces of the adjacent B-type toy members 1410B do not magnetically couple with each other. Likewise, the unmagnetized C faces of the A-type toy members 1410A do not magnetically couple with each other.

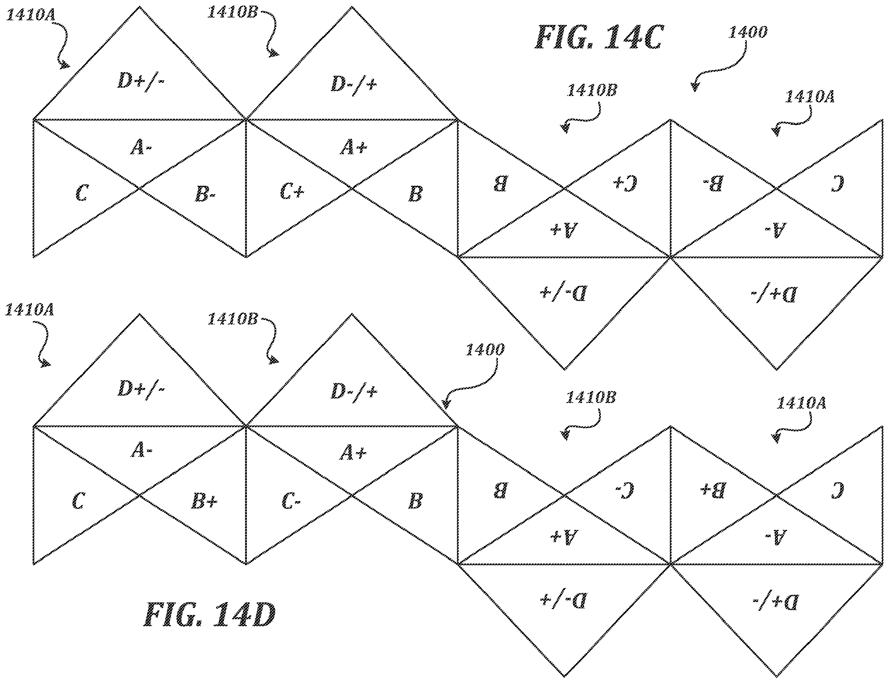

FIGURE 14C shows another polarity configuration that is enabled by the configuration of FIGURE 14A. The moving magnet 1412 of each A-type toy member 1410A is configured to alternatingly exhibit a negative polarity through each of the A and B faces. The C face remains un-magnetized. The D face is magnetized in either a positive or negative polarity by the optional fixed magnet 1414. The moving magnet 1412 of each B-type toy member 1410B is configured to alternatingly exhibit a positive polarity through each of the A and C faces. The B face remains un-magnetized. The D face is magnetized in either a positive or negative polarity by the optional fixed magnet 1414.

FIGURE 14D shows another polarity configuration that is enabled by the configuration of FIGURE 14A. The moving magnet 141 of each A-type toy member 1410A is configured to alternatingly exhibit a negative polarity through the A face, and a positive polarity through the B face. The C face remains un-magnetized. The D face is magnetized in either a positive or negative polarity by the optional fixed magnet 1414. The moving magnet 1412 of each B-type toy member 1410B is configured to alternatingly exhibit a positive polarity through the A face, and a negative polarity through the C face. The B face remains un-magnetized. The D face is magnetized in either a positive or negative polarity by the optional fixed magnet 1414.

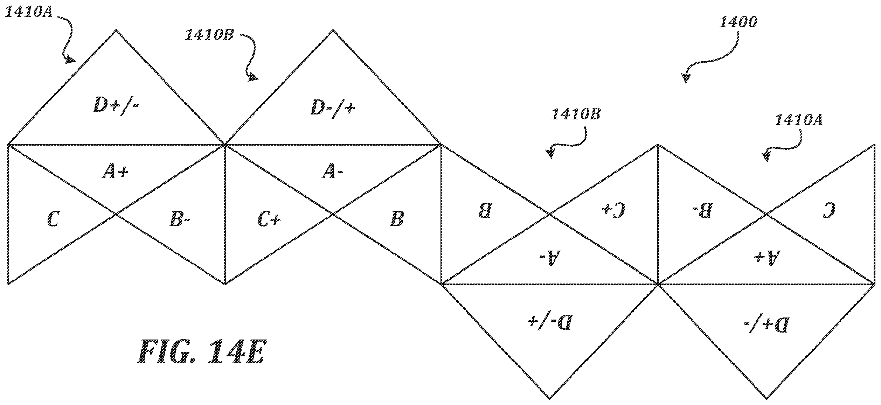

FIGURE 14E shows yet another polarity configuration that is enabled by the configuration of FIGURE 14A. The moving magnet 1412 of each A-type toy member 1410A is configured to alternatingly exhibit a positive polarity through the A face, and a negative polarity through the B face. The C face remains un-magnetized. The D face is magnetized in either a positive or negative polarity by the optional fixed magnet 1414. The moving magnet 1412 of each B-type toy member 1410B is configured to alternatingly exhibit a negative polarity through the A face, and a positive polarity through the C face. The B face remains un-magnetized. The D face is magnetized in either a positive or negative polarity by the optional fixed magnet 1414.

The configurations of FIGURES 14B-14E have at least the following features in common. First, each of the toy members 1410 includes at least one moving magnet 1412 (as shown in FIGURE 14A) configured to alternatingly exhibit a polarity through at least two faces. Second, coupling faces of each A-type toy member 1410A and each B-type toy member 1410B have opposite polarities. Coupling faces include: A faces of the A-type toy members 1410A and A faces of the B-type toy member 1410B; B-faces of each A-type toy member 1410A and adjacent *(e.g.,* flexibly connected) C faces of each B-type toy member 1410B.

The ordered combination of A-type toy members 1410A and B-type toy members 1410B shown in FIGURES 14A-14E enables the geometric art toy 1400 to be selectively and stably positioned *(i.e.,* magnetically held) in each of the configurations shown in FIGURES 6-12 with just twelve moving magnets 1412. Restated, the ordered combinations shown enable each A-type toy member 1410A to magnetically couple with one or more B-type toy member 1410B, such that the geometric art toy 1400 is configured to be selectively and stably positioned *(i.e.,* magnetically held) in each of the configurations shown in FIGURES 6-12. For example, in the configuration shown in FIGURE 6, the B face of each A-type toy members 1410A magnetically couples with the C face of an adj acent B-type toy member 1410B to which it is flexibly connected. As another example, in the configuration shown in FIGURE 12, the A face of each A-type toy member 1410A magnetically couples with the A face of a B-type toy member 1410B. In some embodiments, in the configuration shown in FIGURE 12, the A face of some A-type toy members 1410A magnetically couples with the A face of a B-type toy member 1410B that is separated by two intermediate toy members 1402 (one A-type and one B-type).

Representative toy members that enable the configurations of FIGURES 13A-14E will now be described.

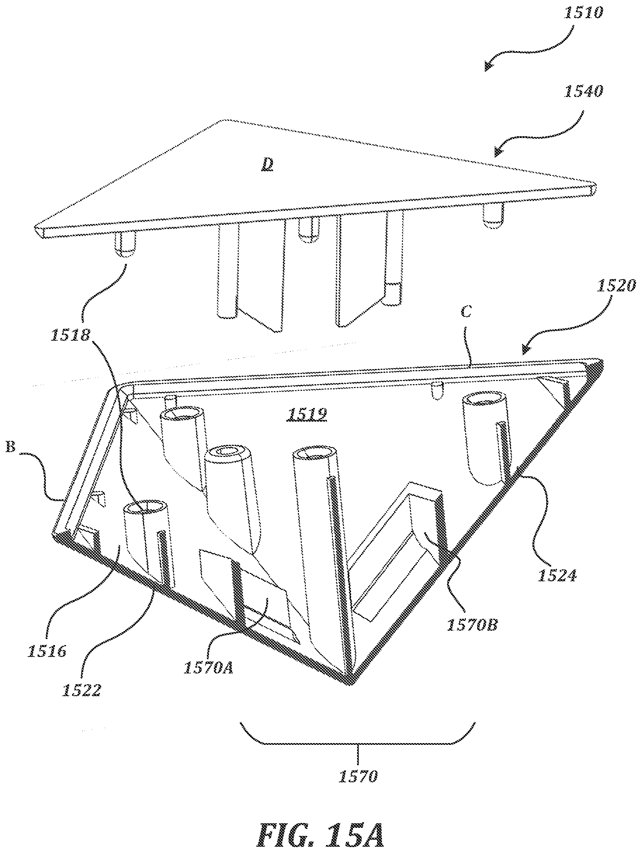

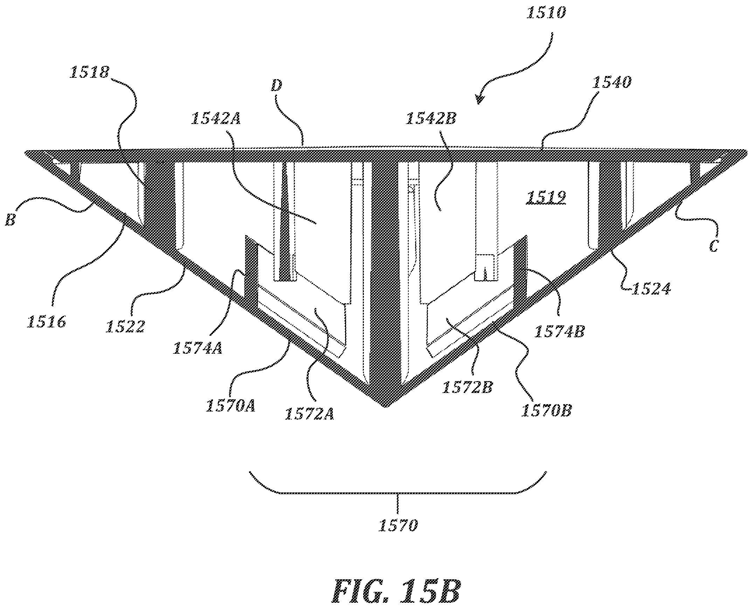

Referring now to FIGURES 15A-15F together, a tetrahedral toy member 1510 is configurable to achieve any of the polarity configurations of FIGURES 14A-14E through the selective placement of one or more moving magnets. In the representative and non-limiting embodiment shown, toy member 1510 includes a tetrahedral outer shell 1516 formed by a first part 1520 and a second part 1540 that are configured to couple together *(e.g.,* via coupling structure 1518). Comparison of FIGURES 15A and 15B illustrates the coupling of the first part 1520 with the second part 1540. The faces of toy member 1510 correspond to the faces shown in FIGURES 13A-14E, *i.e.,* faces A, B, C, and D. In the representative embodiment, first part 1520 provides faces A, B, and C, while second part 1540 provides face D. The toy member 1510 is generally hollow, *i.e.,* the outer shell 1516 defines an internal cavity 1519 that contains the coupling structure 1518 and additional features described below. In the embodiment shown, the outer shell 1516 is formed from plastic or similar material.

The toy member 1510 of FIGURES 15A-15F is representative and non-limiting. For example, in some embodiments, the outer shell 1516 is formed of one, three, or four parts, rather than two parts, *e.g.,* a first part 1520 providing faces A and B, a second part 1540 providing face C, and a third part providing face D. Likewise, each of the parts forming the outer shell 1516 is not required to provide the specific face shown in the representative embodiment of FIGURE 15A. For example, in some embodiments, the first part 1520 and the second part 1540 provide different faces of the toy member 1510, *e.g.,* first part 1520 provides faces B, C, and D, while second part 1540 provides face A. These examples are representative, not limiting.

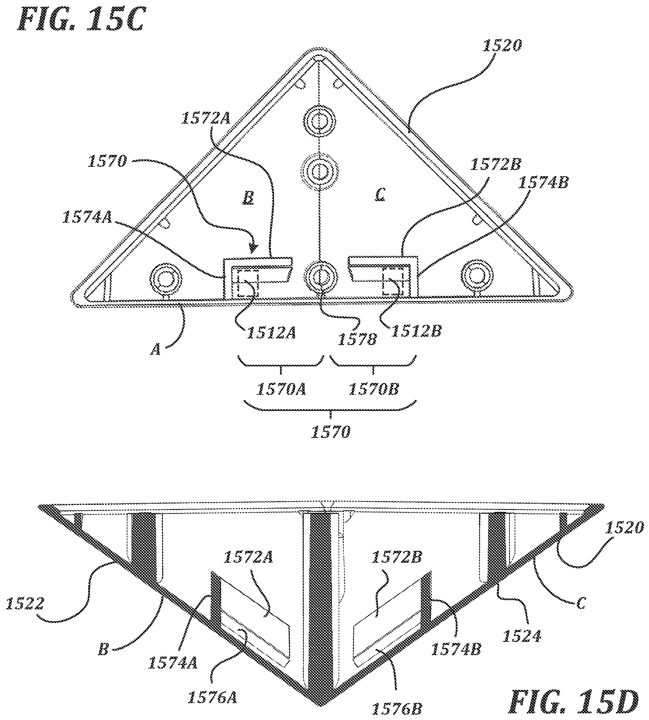

Referring to the exploded section view of FIGURE 15A and also to the section view of FIGURE 15B, the toy member 1510 includes a cradle 1570 disposed inside the tetrahedral outer shell 1516, which includes a first cradle 1570A and a second cradle 1570B. The first cradle 1570A generally runs parallel to the A face *(see* FIGURE 15C) along the edge 1522 where the A and B faces meet. Similarly, the second cradle 1570B runs along the edge 1524 where the A and C faces meet. In some embodiments, the cradle includes only the first cradle 1570A or 1570B. The cradle 1570 includes portions of the first part 1520 and the second part 1540, as described below.

The cradle 1570 is configured to support one or more moving magnets, such that each moving magnet can move and alternatingly exhibit magnetism through a first face and a second face of the toy member 1502. For example, the first cradle 1570A is configured to support a moving magnet such that it can exhibit a first polarity *(e.g.,* a positive polarity) through both the A and B faces. Similarly, the second cradle 1570B is configured to support a moving magnet such that it can exhibit a second polarity *(e.g.,* a negative polarity) through both the A and C faces.

The cradle 1570 enables the moving magnet(s) to alternatingly exhibit magnetism through at least a first face and a second face by forming a confined space, cavity, compartment, or the like in which the moving magnet moves or can move *(e.g.,* shift, slide, rotate, and/or the like), for example in response to another magnet in close proximity *(e.g.,* a moving magnet positioned in another toy member). Therefore, the cradle 1570 serves at least two functions. First, the cradle 1570 retains the moving magnet near the designated faces through which it is designed to exhibit magnetism, *i.e.,* close enough to those faces such that the moving magnet is attracted to another magnet or ferrous element positioned adjacent to either of those faces. Restated, the cradle 1570 prevents the moving magnet from moving in an uncontrolled manner throughout the cavity 1519. Second, the cradle 1570 provides sufficient room for the moving magnet to move *(e.g.,* shift, slide, rotate, and/or the like), such that it can alternatingly exhibit one or more particular polarities through the designated faces. Restated, the cradle 1570 is sized and shaped to allow a limited range of movement of the moving magnet.

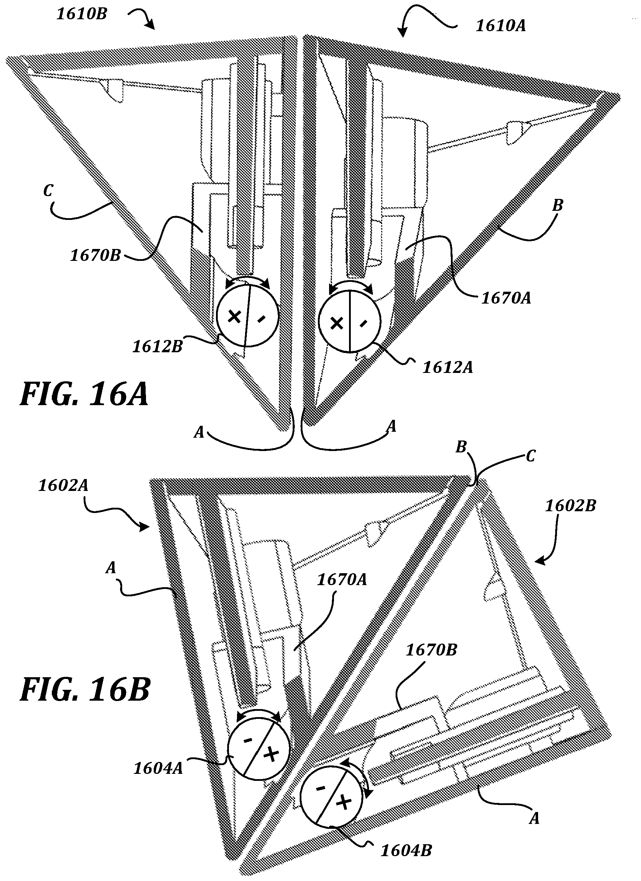

Referring to FIGURES 15C and 15D, the first part 1520 will now be described. In the first part 1520, the cradle 1570 includes side walls 1572, end walls 1574, and a divider 1578 (in this embodiment, a post) that divides the cradle 1570 into the first cradle 1570A that runs along the edge 1522 where the A and B faces meet, and the second cradle 1570B that runs along the edge 1524 where the A and C faces meet. The side walls 1572 and end walls 1574, together with a portion of the A face and a portion of the B or C faces (for the first cradle 1570A and second cradle 1570B, respectively) form a slot or track which is sized slightly larger than a moving magnet which it is designed to contain *(e.g.,* the moving magnet 1512). In some embodiments, a portion of the B or C faces has an arcuate groove or depression 1576 configured to hold the moving magnet in a particular orientation. See FIGURE 16. The divider 1578 is useful because it enables the same toy member 1510 to be utilized to form A-type and B-type toy members. Restated, one representative A-type toy member includes a moving magnet 1512A positioned in the first cradle 1570A (i.e., only that one moving magnet 1512A), and one representative B-type toy member includes a moving magnet 1512B (i.e., only that one moving magnet 1512B) positioned in the second cradle 1570B. In the illustrated embodiment, the cradle 1570 is integrally formed in the first part 1520; however, in some embodiments the cradle 1570 is not integrally formed. Optionally, the divider 1578 doubles as a coupling structure for coupling the first part 1520 with the second part 1540, as shown in FIGURES 15A-15B.

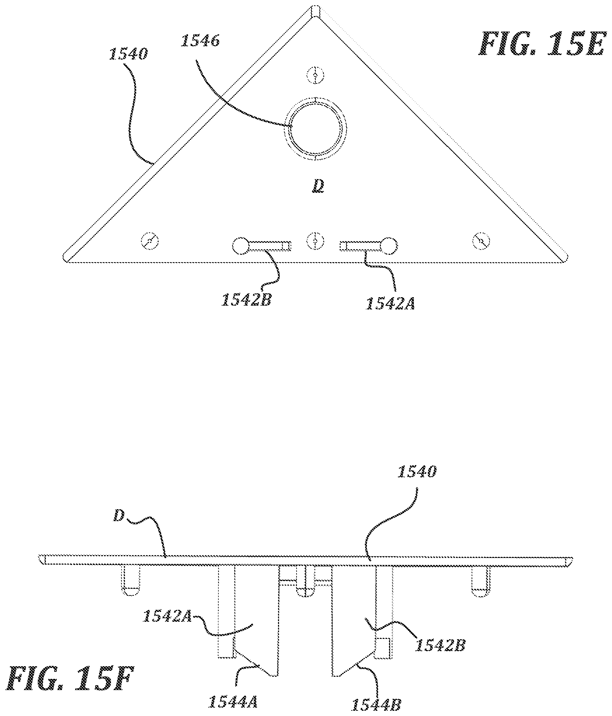

Referring to FIGURES 15E and 15F, the second part 1540 will now be described. The second part 1540 includes portions of the cradle 1570 including retention members 1542 formed as fins or protrusions extending away from the D face. When the second part 1540 is coupled with the first part 1520 as shown in FIGURE 15B, the retention members 1542 each extend toward the respective slot or track formed by the side walls 1572 and end walls 1574 of the first part 1520, in order to form a "lid" on the cradle, thus forming a cavity in which the moving magnet can move. To aid this, each retention member 1542 has a distal edge 1544 that is configured such that it is approximately parallel to the edges 1522 and 1524, respectively, of the first part 1520. The second part 1540 also includes an optional seat 1546 configured to retain an optional fixed magnet.

Thus, the retention members 1542, the side walls 1572, the end walls 1574, and the divider 1578 form the cradle 1570 having a substantially confined space configured to contain at least one moving magnet. Again, the moving magnet can be positioned in either the first cradle 1570A and/or the second cradle 1570B, depending on whether the toy member 1502 is an A-type or B-type toy member.

FIGURES 16A and 16B each show an adjacent A-type toy member 1610A and B-type toy member 1610B, to illustrate some advantages of the geometric art toy. Each toy member 1610A and 1610B is constructed as shown with respect to the toy member 1510 of FIGURES 15A-15F. Further, each toy member 1610A and 1610B includes a single moving magnet 1612A and 1612B positioned in a respective cradle 1670A and 1670B, such that the A-type toy member 1610A is analogous to the A-type toy member 1410A of FIGURE 14A, and the B-type toy member 1610B is analogous to the B-type toy member 1410B of FIGURE 14A.

FIGURE 16A shows the adjacent toy members 1610A and 1610B with their A faces adjacent to each other. One arrangement of a geometric art toy that causes this interaction is the cube configuration of FIGURE 12. By comparison, in FIGURE 16B, the B face of the A-type toy member 1610A is adjacent to the C face of the B-type toy member 1610B. One arrangement of a geometric art toy that causes this interaction is the configuration of FIGURE 6.

Referring to FIGURE 16A, the proximity of the toy members causes the two moving magnets 1612A and 1612B to act on each other through the A faces of the respective toy members, such that each moving magnet moves in its respective cradle 1670A and 1670B. Thus, one representative polarity outcome of this interaction is: moving magnet 1612B exhibits negative polarity through the A face, while moving magnet 1612A exhibits a positive polarity through the A face. This polarity outcome is shown in FIGURE 14B. Consequently, the two moving magnets will attract each other, thus magnetically coupling the A faces of the two toy members together. In some embodiments, the polarities are reversed, *i.e.,* moving magnet 1612B exhibits a positive polarity through the A face, while the moving magnet 1612A exhibits a negative polarity through the A face.

Referring now to FIGURE 16B, the proximity of the toy members again causes the two moving magnets to act on each other, but this time through different faces. In this example, the moving magnet 1612A exhibits a positive polarity through the B face of the A-type toy member 1610A, and the moving magnet 1612A exhibits a negative polarity through the C face of the B-type toy member 1610B. In this way, the two moving magnets attract each other, causing the B face of the A-type toy member 1610A to magnetically couple with the C face of the B-type toy member 1610B.

Taken together, FIGURES 16A and 16B demonstrate one example of how a moving magnet *(e.g.,* moving magnet 1612A) can alternatingly exhibit a first polarity *(e.g.,* a positive polarity) through a first face *(e.g.,* the A face) and also a second face *(e.g.,* the B face) of a tetrahedral toy member. Effectively, each moving magnet 1612 simulates two fixed magnets. The cradle 1670 of each toy member enables this advantageous functionality.

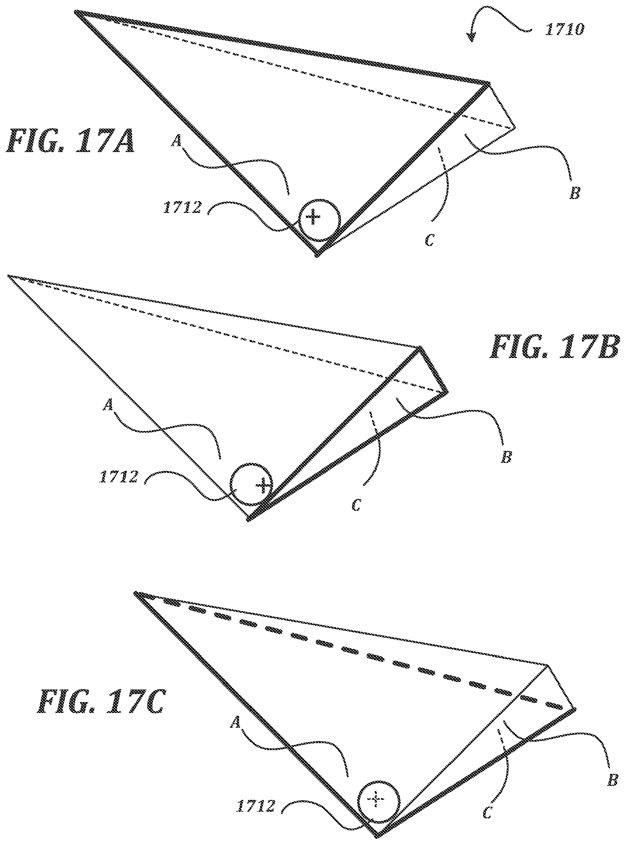

FIGURES 17A-17C schematically illustrate another representative embodiment of a tetrahedral toy member 1710 having a single moving magnet 1712 that is diametrically magnetized. As shown, the toy member 1710 is advantageously is configured such that the moving magnet 1712 can rotate relative to the outer shell *(e.g.,* in response to another magnet), and alternatingly exhibit a first polarity through three faces: the A, B, and C faces. Not only does this enable greater additional functionality *(e.g.,* a plurality of geometric art toys incorporating one or more toy members 1710 can be magnetically assembled in additionally ways), but it also makes the geometric art toy more stable in each of its configurations *(e.g.,* the configurations of FIGURES 6-12). These advantages contribute to greater user enjoyment.

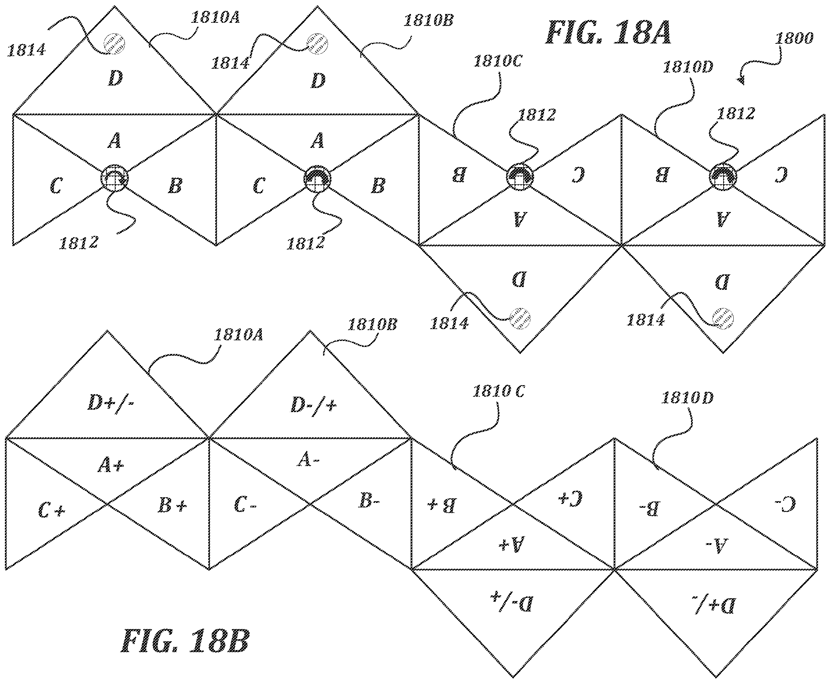

FIGURE 18A schematically shows a segment of a geometric art toy 1800 having a plurality of tetrahedral toy members 1810 which are similar to the toy member 1710 of FIGURES 17A - 17B. In this embodiment, each toy member 1810 is substantially identical, *i.e.,* there is no A-type and B-type, per se. Rather, each toy member 1810 includes one moving magnet 1812 *(e.g.,* a spherical magnet) positioned near a vertex of the A, B, and C faces. In addition, each toy member 1810 includes an optional fixed magnet 1814. Given its proximity to the A, B, and C faces, the moving magnet 1812 can exhibit magnetism through each of those faces. In some embodiments, the toy member 1810 is configured such that the moving magnet 1804 exhibits a first polarity through the A, B, and C faces.

FIGURE 18B demonstrates one representative polarity outcome when the toy members 1810 are connected as shown. In the first and third toy members 1810A and 1810C, the moving magnet 1812 alternatingly exhibits positive polarity through each of the A, B, and C faces. In the second and fourth toy member 1810B and 1810D, the moving magnet 1812 alternatingly exhibits negative polarity through each of the A, B, and C faces. In this way, adjacent toy members are magnetically attracted to each other.

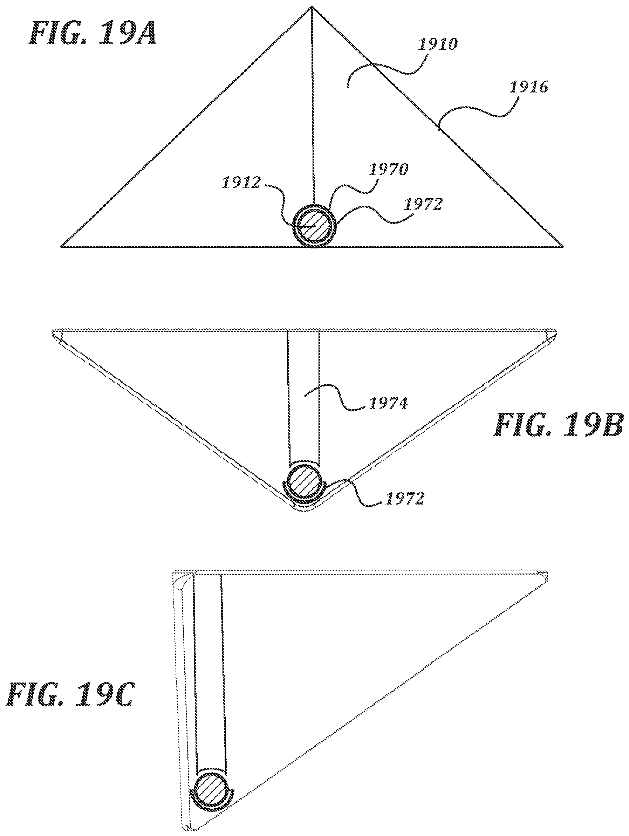

FIGURES 19A - 19C provide one representative embodiment of a toy member 1910 that is configured for use in a geometric art toy as shown herein. In particular, the toy member 1910 is configured such that a moving magnet can alternatingly exhibit a first polarity through three faces. Similar to the previous embodiments, the toy member 1910 has a tetrahedral outer shell 1916 defined by A, B, C, and D face. A cradle 1970 is provided inside the outer shell 1916 adjacent to the vertex of the A, B, and C faces. The cradle 1970 holds a spherical moving magnet 1912 near the A, B, and C faces and permits it to rotate about its own center, *e.g.,* in response to a nearby magnet or ferrous element. To achieve this, the cradle 1970 has a first portion 1972 and a complementary second portion 1974, the first portion 1972 having a partially spherical shape *(e.g.,* hemispherical) with a diameter slightly larger than the spherical moving magnet 1912. The cradle 1970 holds the moving magnet 1912, which rotates in response to outside magnetic forces such that it alternatingly exhibits magnetism through the A, B, and C faces.

Still other embodiments of the present disclosure can be understood with reference to FIGURES 20A - 20D. In particular, FIGURES 20A and 20B show another type of tetrahedral toy member 2010a, while FIGURES 20C and 20D show a magnetically complementary type of tetrahedral toy member 2010b. Toy members 2010a can be utilized with toy members 2010b to form geometric toys as described above.

Advantageously, the toy members 2010 do not need to include any moving magnets. Rather, a single fixed magnet is positioned in each toy member 2010 such that it exhibits a first polarity through a first face *(e.g.,* an "A" face) and a second polarity through a second face *(e.g.,* a "B" or "C" face). This can be achieved by utilizing an axially magnetized magnet in each toy member 2010, with one pole of the axially magnetized magnet being positioned adjacent the first face, and the second pole being positioned adjacent the second face. The magnet can be held in place by a "cradle" as described above, by friction fit in a bore or hole formed in the toy member, by adhesive, or by similar connection means.

Referring to FIGURES 20A and 20B, a toy member 2010a is formed as a tetrahedron with four faces A, B, C, and D, which correspond to alike-named faces described above. An axially magnetized magnet 2012a is disposed within the toy member 2010a such that a first pole *(e.g.,* positive pole) is disposed adjacent to the A face, and the second pole *(e.g.,* negative pole) is disposed adjacent to the B face. In this representative embodiment, the magnet 2012a is disposed within a bore 2014a formed in the toy member 2010a. For example, the bore 2014a can be formed through at least one of the A or B faces, and the magnet 2012a can be retained therein by friction fit.

Referring to FIGURES 20C and 20D, a toy member 2010b is formed as a tetrahedron with four faces A, B, C, and D, which correspond to the four like-named faces of toy member 2010a. An axially magnetized magnet 2012b is disposed within the toy member 2010b such that a first pole *(e.g.,* negative pole) is disposed adjacent to the A face, and the second pole *(e.g.,* positive pole) is disposed adjacent to the C face. In this representative embodiment, the magnet 2012b is disposed within a bore 2014b formed in the toy member 2010b. For example, the bore 2014b can be formed through at least one of the A or C faces, and the magnet 2012b can be retained therein by friction fit.

The toy member 2010b is magnetically complementary to toy member 2010a. That is, the pole of magnet 2012a disposed adjacent the A face in toy member 2010a should have the opposite polarity of the pole of the magnet 2012b disposed adjacent the A face in toy member 2010b. Further, the position of magnets 2012 a, b should have corresponding locations on the respective A faces. Likewise, the pole of magnet 2012a disposed adjacent the B face in toy member 2010a should have the opposite polarity (and corresponding location) of the pole of the magnet 2012b disposed adjacent the C face in toy member 2010b.

When formed as described above, toy member 2010a can be considered an "A-type" toy member and toy member 2010b can be considered a magnetically complementary "B-type" toy member. Accordingly, magnetically complementary toy members 2010a and 2010b can be arranged in a repeating ABBA sequence having the A-, B-, and C- face polarities shown in FIGURES 14D and 14E. Thus, toy members 2010a and 2010B can form a geometric art toy as described above. As one example, twelve toy members 2010 can be connected in a loop, each being movably connected to two adjacent toy members 2010, with an ABBA sequence appearing four times total such that a geometric art toy is formed having twelve toy members 2010 connected in the following sequence: ABBAABBAABBA. This configuration enables magnetic coupling between A- and B-type toy members. For example, this configuration enables magnetic coupling between oppositely magnetized A- faces of toy members 2010a, b (as shown in FIGURE 16A). In addition, this configuration enables magnetic coupling between oppositely magnetized B- and C- faces of toy members 2010a, b (as shown in FIGURE 16B).

It is understood that although a number of different embodiments of art toys and toy members have been illustrated and described herein, one or more features of any one embodiment can be combined with one or more features of one or more of the other embodiments, provided that such combination satisfies the intent of the present disclosure.

While a number of representative aspects and embodiments of an art toy and toy members have been discussed above, those skilled in the art will recognize certain modifications, permutations, additions and sub-combinations thereof.

The detailed description set forth above in connection with the appended drawings, where like numerals reference like elements, are intended as a description of various embodiments of the present disclosure and are not intended to represent the only embodiments. Each embodiment described in this disclosure is provided as an example or illustration and should not be construed as preferred or advantageous over other embodiments. The illustrative examples provided herein are not intended to be exhaustive or to limit the disclosure to the precise forms disclosed. Similarly, any steps described herein may be interchangeable with other steps, or combinations of steps, in order to achieve the same or substantially similar result.

Generally, the embodiments disclosed herein are non-limiting, and the inventor contemplates that other embodiments may include structures and functionalities from more than one specific embodiment shown in the FIGURES and described in the specification.. For example, the present disclosure includes additional embodiments having combinations of any one or more features described above with respect to the representative embodiments.

In the foregoing description, specific details are set forth to provide a thorough understanding of representative embodiments of the present disclosure. It will be apparent to one skilled in the art, however, that the embodiments disclosed herein may be practiced without embodying all the specific details. In some instances, well-known process steps have not been described in detail in order not to obscure various aspects of the present disclosure.

The present application may include references to directions, such as "first," "second," "vertical," "horizontal," "front," "rear," "left," "right," "top," and "bottom," etc. These references, and other similar references in the present application, are intended to help describe and understand the particular embodiment (such as when the embodiment is positioned for use) and are not intended to limit the present disclosure to these directions or locations.

The present application may also reference quantities and numbers. Unless specifically stated, such quantities and numbers are not to be considered restrictive, but representative of the possible quantities or numbers associated with the present application. Also in this regard, the present application may use the term "plurality" to reference a quantity or number. In this regard, the term "plurality" is meant to be any number that is more than one, for example, two, three, four, five, etc. The term "about," "approximately," etc., means plus or minus 5% of the stated value. The term "based upon" means "based at least partially upon." For the purposes of the present disclosure, the phrase "at least one of A and B" is equivalent to "A and/or B" or vice versa, namely "A" alone, "B" alone or "A and B." Similarly, the phrase "at least one of A, B, and C," for example, means (A), (B), (C), (A and B), (A and C), (B and C), or (A, B, and C), including all further possible permutations when greater than three elements are listed.

## Claims

1. A geometric art toy (1400) comprising:
a plurality of first toy members (1410A) formed as tetrahedrons, each first toy member (1410A) comprising a magnet (1412)(); and
a plurality of second toy members (1410B) formed as tetrahedrons, each second toy member (1410B) comprising a magnet (1412))(1410B);
wherein the plurality of first toy members (1410A) and the plurality of second toy members (1410B) are connected together,
wherein, in a first configuration, the magnet (1412) of one first toy member (1410A) magnetically couples with the magnet (1412) of one second toy member (1410B) through the first faces thereof, and
wherein, in a second configuration, the magnet (1412) of the one first toy member (1410A) magnetically couples with the magnet (1412) of another second toy member (1410B) through the second faces thereof,
**characterized in that**
the magnet (1412) of each first toy member (1410A) is movably positioned in a cradle (1570), wherein the magnet (1412) alternatingly exhibits a first polarity through a first face and a second face of the first toy member (1410A), and
the magnet (1412) of each second toy member (1410B) is movably positioned in a cradle (1570), wherein the magnet (1412) alternatingly exhibits a second polarity that is different from the first polarity through a first face and a second face of the second toy member (1410B).

2. The geometric art toy (1400) of claim 1, wherein the cradle (1570) of each first toy member (1410A) and each second toy member (1410B) is each located inside a tetrahedral outer shell (1516) of the respective first toy member (1410A) or second toy member (1410B).

3. The geometric art toy (1400) of any preceding claim, wherein the plurality of first toy members (1410A) and the plurality of second toy members (1410B) comprise at least part of twelve toy members formed as tetrahedrons.

4. The geometric art toy (1400) of any preceding claim, wherein the plurality of first toy members (1410A) and the plurality of second toy members (1410B) are flexibly connected in the following sequence: one of the first toy members (1410A), one of the second toy members (1410B), another of the second toy members (1410B), and another of the first toy members (1410A).

5. The geometric art toy (1400) of any preceding claim, wherein the magnet (1412) of each first toy member (1410A) is the only magnet (1412) in each first toy member (1410A), and wherein the magnet (1412) of each second toy member (1410B) is the only magnet (1412) in each second toy member (1410B).

6. The geometric art toy (1400) of any preceding claim, wherein each first toy member (1410A) further comprises a second magnet (1414) configured to exhibit one of the first polarity or the second polarity through a third face of the first toy member (1410A), and wherein each second toy member (1410B) further comprises a second magnet (1414) configured to exhibit the other of the first polarity or the second polarity through a third face of the second toy member (1410B).

7. The geometric art toy (1400) of any preceding claim, wherein the cradle (1570) of each first toy member (1410A) and each second toy member (1410B) forms a cavity in which the magnet ((1412) moves, the cavity being adjacent to the first face and second face.

8. The geometric art toy (1400) of any preceding claim, wherein the cradle (1570) of each first toy member (1410A) and each second toy member (1410B) comprises a track formed therein.

9. The geometric art toy (1400) of claim 8, wherein either:
the track of each first toy member (1410A) and each second toy member (1410B) has an arcuate surface formed therein, the arcuate surface being configured to receive the magnet (1412);
OR
the track of each first toy member (1410A) and each second toy member (1410B) is integrally formed with the first toy member (1410A) and the second toy member (1410B), respectively.

10. The geometric art toy (1400) of any preceding claim, wherein in each of the first toy member (1410A) and the second toy member (1410B), a divider (1578) divides the cradle (1570) into a first cradle (1570A) and a second cradle (1570B).

11. The geometric art toy (1400) of claim 10, wherein either:
the divider (1578) comprises coupling structure (1518) configured to couple a first part (1520) and a second part (1540) of the outer shell (1516);
OR
the magnet (1412) of each first toy member (1410A) is positioned in the first cradle (1570A), and the magnet (1412) of each second toy member (1410B) is positioned in the second cradle (1570B).

12. The geometric art toy (1400) of any preceding claim, wherein each first toy member (1410A) and each second toy member (1410B) comprises a retention member (1542) configured to retain the magnet (1412) within the cradle (1570);
and
the retention member (1542) is a protrusion extending away from a third face of the first toy member (1410A) or the second toy member (1410B), respectively.

13. The geometric art toy (1400) of any preceding claim, wherein the magnet (1412) of each first toy member (1410) and of each second toy member (1410B) is a cylinder magnet that rotates within the cradle (1570).

14. The geometric art toy (1800) of any preceding claim, wherein the cradle (1970) of each first toy member (1810) and each second toy member (1810) comprises a partially spherical support disposed adjacent a vertex of the first face, the second face, and the third face, wherein the magnet (1812) of each first toy member (1810) and of each second toy member (1810) is a spherical magnet (1812) that rotates within the partially spherical support;
and
in each first toy member (1810), the spherical magnet (1812) alternatingly exhibits the first polarity through the first face, the second face, and the third face, and wherein in each second toy member (1810), the spherical magnet (1812) alternatingly exhibits the second polarity through the first face, the second face, and the third face.

15. The geometric art toy (1400) of any preceding claim, wherein the plurality of first toy members (1410A) is joined with the plurality of second toy members (1410B) such that each first toy member (1410A) is directly and flexibly connected to another first toy member (1410A) and to one second toy member (1410B).

## Patentansprüche

1. Geometrisches Kunstspielzeug (1400), umfassend:
eine Vielzahl von ersten Spielzeugelementen (1410A), die als Tetraeder gebildet sind, wobei jedes erste Spielzeugelement (1410A) einen Magneten (1412)() umfasst; und
eine Vielzahl von zweiten Spielzeugelementen (1410B), die als Tetraeder gebildet sind, wobei jedes zweite Spielzeugelement (1410B) einen Magneten (1412)(1410B) umfasst;
wobei die Vielzahl von ersten Spielzeugelementen (1410A) und die Vielzahl von zweiten Spielzeugelementen (1410B) miteinander verbunden sind,
wobei, in einer ersten Konfiguration, sich der Magnet (1412) eines ersten Spielzeugelements (1410A) magnetisch mit dem Magneten (1412) eines zweiten Spielzeugelements (1410B) durch die ersten Flächen davon koppelt, und
wobei, in einer zweiten Konfiguration, sich der Magnet (1412) des einen ersten Spielzeugelements (1410A) magnetisch mit dem Magneten (1412) eines anderen zweiten Spielzeugelements (1410B) durch die zweiten Flächen davon koppelt,
**dadurch gekennzeichnet, dass**
der Magnet (1412) jedes ersten Spielzeugelements (1410A) beweglich in einer Aufnahme (1570) positioniert ist, wobei der Magnet (1412) abwechselnd eine erste Polarität durch eine erste Fläche und eine zweite Fläche des ersten Spielzeugelements (1410A) aufweist, und
der Magnet (1412) jedes zweiten Spielzeugelements (1410B) beweglich in einer Aufnahme (1570) positioniert ist, wobei der Magnet (1412) abwechselnd eine zweite Polarität, die sich von der ersten Polarität unterscheidet, durch eine erste Fläche und eine zweite Fläche des zweiten Spielzeugelements (1410B) aufweist.

2. Geometrisches Kunstspielzeug (1400) nach Anspruch 1, wobei die Aufnahme (1570) jedes ersten Spielzeugelements (1410A) und jedes zweiten Spielzeugelements (1410B) jeweils innerhalb einer tetraedrischen Außenhülle (1516) des jeweiligen ersten Spielzeugelements (1410A) oder zweiten Spielzeugelements (1410B) befindlich ist.

3. Geometrisches Kunstspielzeug (1400) nach einem vorhergehenden Anspruch, wobei die Vielzahl von ersten Spielzeugelementen (1410A) und die Vielzahl von zweiten Spielzeugelementen (1410B) mindestens einen Teil von zwölf als Tetraeder gebildeten Spielzeugelementen umfassen.

4. Geometrisches Kunstspielzeug (1400) nach einem vorhergehenden Anspruch, wobei die Vielzahl von ersten Spielzeugelementen (1410A) und die Vielzahl von zweiten Spielzeugelementen (1410B) in der folgenden Reihenfolge flexibel verbunden sind: eines der ersten Spielzeugelemente (1410A), eines der zweiten Spielzeugelemente (1410B), ein anderes der zweiten Spielzeugelemente (1410B) und ein anderes der ersten Spielzeugelemente (1410A).

5. Geometrisches Kunstspielzeug (1400) nach einem vorhergehenden Anspruch, wobei der Magnet (1412) jedes ersten Spielzeugelements (1410A) der einzige Magnet (1412) in jedem ersten Spielzeugelement (1410A) ist und wobei der Magnet (1412) jedes zweiten Spielzeugelements (1410B) der einzige Magnet (1412) in jedem zweiten Spielzeugelement (1410B) ist.

6. Geometrisches Kunstspielzeug (1400) nach einem vorhergehenden Anspruch, wobei jedes erste Spielzeugelement (1410A) ferner einen zweiten Magneten (1414) umfasst, der dazu konfiguriert ist, eine der ersten Polarität oder der zweiten Polarität durch eine dritte Fläche des ersten Spielzeugelements (1410A) aufzuweisen, und wobei jedes zweite Spielzeugelement (1410B) ferner einen zweiten Magneten (1414) umfasst, der dazu konfiguriert ist, die andere der ersten Polarität oder der zweiten Polarität durch eine dritte Fläche des zweiten Spielzeugelements (1410B) aufzuweisen.

7. Geometrisches Kunstspielzeug (1400) nach einem vorhergehenden Anspruch, wobei die Aufnahme (1570) jedes ersten Spielzeugelements (1410A) und jedes zweiten Spielzeugelements (1410B) einen Hohlraum bildet, in dem sich der Magnet (1412) bewegt, wobei der Hohlraum an die erste Fläche und zweite Fläche angrenzt.

8. Geometrisches Kunstspielzeug (1400) nach einem vorhergehenden Anspruch, wobei die Aufnahme (1570) jedes ersten Spielzeugelements (1410A) und jedes zweiten Spielzeugelements (1410B) eine darin gebildete Spur umfasst.

9. Geometrisches Kunstspielzeug (1400) nach Anspruch 8, wobei entweder:
die Spur jedes ersten Spielzeugelements (1410A) und jedes zweiten Spielzeugelements (1410B) eine darin gebildete bogenförmige Oberfläche aufweist, wobei die bogenförmige Oberfläche dazu konfiguriert ist, den Magneten (1412) aufzunehmen;
ODER
die Spur jedes ersten Spielzeugelements (1410A) und jedes zweiten Spielzeugelements (1410B) integral mit dem ersten Spielzeugelement (1410A) bzw. dem zweiten Spielzeugelement (1410B) gebildet ist.

10. Geometrisches Kunstspielzeug (1400) nach einem vorhergehenden Anspruch, wobei in jedem des ersten Spielzeugelements (1410A) und des zweiten Spielzeugelements (1410B) ein Teiler (1578) die Aufnahme (1570) in eine erste Aufnahme (1570A) und eine zweite Aufnahme (1570B) unterteilt.

11. Geometrisches Kunstspielzeug (1400) nach Anspruch 10, wobei entweder:
der Teiler (1578) eine Kopplungsstruktur (1518) umfasst, die dazu konfiguriert ist, einen ersten Teil (1520) und einen zweiten Teil (1540) der Außenschale (1516) zu koppeln;
ODER
der Magnet (1412) jedes ersten Spielzeugelements (1410A) in der ersten Aufnahme (1570A) positioniert ist und der Magnet (1412) jedes zweiten Spielzeugelements (1410B) in der zweiten Aufnahme (1570B) positioniert ist.

12. Geometrisches Kunstspielzeug (1400) nach einem vorhergehenden Anspruch, wobei jedes erste Spielzeugelement (1410A) und jedes zweite Spielzeugelement (1410B) ein Rückhalteelement (1542) umfasst, das dazu konfiguriert ist, den Magneten (1412) innerhalb der Aufnahme (1570) zurückzuhalten;
und
das Rückhalteelement (1542) ein Vorsprung ist, der sich von einer dritten Fläche des ersten Spielzeugelements (1410A) bzw. des zweiten Spielzeugelements (1410B) weg erstreckt.

13. Geometrisches Kunstspielzeug (1400) nach einem vorhergehenden Anspruch, wobei der Magnet (1412) jedes ersten Spielzeugelements (1410) und jedes zweiten Spielzeugelements (1410B) ein Zylindermagnet ist, der sich innerhalb der Aufnahme (1570) dreht.

14. Geometrisches Kunstspielzeug (1800) nach einem vorhergehenden Anspruch, wobei die Aufnahme (1970) jedes ersten Spielzeugelements (1810) und jedes zweiten Spielzeugelements (1810) einen teilweise kugelförmigen Träger umfasst, der angrenzend an einen Scheitelpunkt der ersten Fläche, der zweiten Fläche und der dritten Fläche angeordnet ist, wobei der Magnet (1812) jedes ersten Spielzeugelements (1810) und jedes zweiten Spielzeugelements (1810) ein kugelförmiger Magnet (1812) ist, der sich innerhalb des teilweise kugelförmigen Trägers dreht;
und
in jedem ersten Spielzeugelement (1810) der kugelförmige Magnet (1812) abwechselnd die erste Polarität durch die erste Fläche, die zweite Fläche und die dritte Fläche aufweist und wobei in jedem zweiten Spielzeugelement (1810) der kugelförmige Magnet (1812) abwechselnd die zweite Polarität durch die erste Fläche, die zweite Fläche und die dritte Fläche aufweist.

15. Geometrisches Kunstspielzeug (1400) nach einem vorhergehenden Anspruch, wobei die Vielzahl von ersten Spielzeugelementen (1410A) mit der Vielzahl von zweiten Spielzeugelementen (1410B) so verbunden ist, dass jedes erste Spielzeugelement (1410A) direkt und flexibel mit einem anderen ersten Spielzeugelement (1410A) und mit einem zweiten Spielzeugelement (1410B) verbunden ist.

## Revendications

1. Un jouet d'art géométrique (1400) comprenant :
une pluralité de premiers éléments de jouet (1410A) en forme de tétraèdres, chaque premier élément de jouet (1410A) comprenant un aimant (1412) ; et
une pluralité de deuxièmes éléments de jouet (1410B) en forme de tétraèdres, chaque deuxième élément de jouet (1410B) comprenant un aimant (1412) (1410B) ;
la pluralité des premiers éléments de jouet (1410A) et la pluralité des deuxièmes éléments de jouet (1410B) étant reliés les uns aux autres,
dans lequel, dans une première configuration, l'aimant (1412) d'un premier élément de jouet (1410A) se couple magnétiquement à l'aimant (1412) d'un deuxième élément de jouet (1410B) à travers les premières faces de ceux-ci, et
dans lequel, dans une deuxième configuration, l'aimant (1412) du premier élément de jouet (1410A) se couple magnétiquement à l'aimant (1412) d'un autre deuxième élément de jouet (1410B) à travers les deuxièmes faces de ceux-ci,
**caractérisé en ce que**
l'aimant (1412) de chaque premier élément de jouet (1410A) est positionné de manière mobile dans un berceau (1570), l'aimant (1412) présentant alternativement une première polarité à travers une première face et une deuxième face du premier élément de jouet (1410A), et
l'aimant (1412) de chaque deuxième élément de jouet (1410B)) est positionné de manière mobile dans un berceau (1570), l'aimant (1412) présentant alternativement une deuxième polarité différente de la première polarité à travers une première face et une deuxième face du deuxième élément de jouet (1410B).

2. Le jouet d'art géométrique (1400) de la revendication 1, dans lequel le berceau (1570) de chaque premier élément de jouet (1410A) et chaque deuxième élément de jouet (1410B) est chacun situé à l'intérieur d'une coque extérieure tétraédrique (1516) du premier élément de jouet (1410A) ou du deuxième élément de jouet (1410B) respectif.

3. Le jouet d'art géométrique (1400) d'une quelconque des revendications précédentes, dans lequel la pluralité de premiers éléments de jouet (1410A) et la pluralité de deuxièmes éléments de jouet (1410B) comprennent au moins une partie de douze éléments de jouet en forme de tétraèdres.

4. Le jouet d'art géométrique (1400) d'une quelconque des revendications précédentes, dans lequel la pluralité de premiers éléments de jouet (1410A) et la pluralité de deuxièmes éléments de jouet (1410B) sont reliés de manière flexible selon la séquence suivante : un des premiers éléments de jouet (1410A), un des deuxièmes éléments de jouet (1410B), un autre des deuxièmes éléments de jouet (1410B) et un autre des premiers éléments de jouet (1410A).

5. Le jouet d'art géométrique (1400) d'une quelconque des revendications précédentes, dans lequel l'aimant (1412) de chaque premier élément de jouet (1410A) est le seul aimant (1412) dans chaque premier élément de jouet (1410A), et dans lequel l'aimant (1412) de chaque deuxième élément de jouet (1410B) est le seul aimant (1412) dans chaque deuxième élément de jouet (1410B).

6. Le jouet d'art géométrique (1400) d'une quelconque des revendications précédentes, dans lequel chaque premier élément de jouet (1410A) comprend en sus un deuxième aimant (1414) configuré pour présenter une de la première polarité ou la deuxième polarité à travers une troisième face du premier élément de jouet (1410A), et dans lequel chaque deuxième élément de jouet (1410B) comprend en sus un deuxième aimant (1414) configuré pour présenter l'autre de la première polarité ou la deuxième polarité à travers une troisième face du deuxième élément de jouet (1410B).

7. Le jouet d'art géométrique (1400) d'une quelconque des revendications précédentes, dans lequel le berceau (1570) de chaque premier élément de jouet (1410A) et chaque deuxième élément de jouet (1410B) forme une cavité dans laquelle l'aimant ((1412) bouge, la cavité étant adjacente à la première face et la deuxièmes face.

8. Le jouet d'art géométrique (1400) d'une quelconque des revendications précédentes, dans lequel le berceau (1570) de chaque premier élément de jouet (1410A) et chaque deuxième élément de jouet (1410B) comprend une piste formée à l'intérieur.

9. Le jouet d'art géométrique (1400) de la revendication 8, dans lequel soit :
la piste de chaque premier élément de jouet (1410A) et chaque deuxième élément de jouet (1410B) a une surface arquée formée dans celle-ci, la surface arquée étant configurée pour recevoir l'aimant (1412) ;
soit :
la piste de chaque premier élément de jouet (1410A) et chaque deuxième élément de jouet (1410B) est formée d'une seule pièce avec le premier élément de jouet (1410A) et le deuxième élément de jouet (1410B), respectivement.

10. Le jouet d'art géométrique (1400) d'une quelconque des revendications précédentes, dans lequel, dans chacun du premier élément de jouet (1410A) et du deuxième élément de jouet (1410B), un séparateur (1578) sépare le berceau (1570) en un premier berceau (1570A) et un deuxième berceau (1570B).

11. Le jouet d'art géométrique (1400) de la revendication 10, dans lequel soit :
le séparateur (1578) comprend une structure de couplage (1518) configurée pour coupler une première partie (1520) et une deuxième partie (1540) de la coque extérieure (1516) ;
soit :
l'aimant (1412) de chaque premier élément de jouet (1410A) est positionné dans le premier berceau (1570A), et l'aimant (1412) de chaque deuxième élément de jouet (1410B) est positionné dans le deuxième berceau (1570B).

12. Le jouet d'art géométrique (1400) d'une quelconque des revendications précédentes, dans lequel chaque premier élément de jouet (1410A) et chaque deuxième élément de jouet (1410B) comprend un organe de retenue (1542) configuré pour retenir l'aimant (1412) à l'intérieur du berceau (1570) ;
et :
l'organe de retenue (1542) est une saillie qui s'éloigne d'une troisième face du premier élément de jouet (1410A) ou du deuxième élément de jouet (1410B), respectivement.

13. Le jouet d'art géométrique (1400) d'une quelconque des revendications précédentes, dans lequel l'aimant (1412) de chaque premier élément de jouet (1410) et de chaque deuxième élément de jouet (1410B) est un aimant cylindrique qui tourne à l'intérieur du berceau (1570).

14. Le jouet d'art géométrique (1400) d'une quelconque des revendications précédentes, dans lequel le berceau (1970) de chaque premier élément de jouet (1810) et chaque deuxième élément de jouet (1810) comprend un support partiellement sphérique disposé en position adjacente à un sommet de la première face, la deuxième face et la troisième face, l'aimant (1812) de chaque premier élément de jouet (1810) et de chaque deuxième élément de jouet (1810) étant un aimant sphérique (1812) qui tourne à l'intérieur du support partiellement sphérique ;
et :
dans chaque premier élément de jouet (1810), l'aimant sphérique (1812) présente alternativement la première polarité à travers la première face, la deuxième face et la troisième face, et dans lequel dans chaque deuxième élément de jouet (1810), l'aimant sphérique (1812) présente alternativement la deuxième polarité à travers la première face, la deuxième face et la troisième face.

15. Le jouet d'art géométrique (1400) d'une quelconque des revendications précédentes, dans lequel la pluralité des premiers éléments de jouet (1410A) est jointe à la pluralité des deuxièmes éléments de jouet (1410B) de telle sorte que chaque premier élément de jouet (1410A) est relié directement et de manière flexible à un autre premier élément de jouet (1410A) et à un deuxième élément de jouet (1410B).
